# EUROPEAN PATENT APPLICATION

(11) **EP 4 851 841 A1**
(43) Date of publication of application: **09.12.2026**
(21) Application number: 25181531.2
(22) Date of filing: 07.06.2025
(51) Int. Cl.: G06F 21/60, G06F 21/62, H04L 9/08, H04L 9/32

(54) **METHOD AND APPARATUS FOR ENROLLING A DATA MESSAGE FOR IDENTIFICATION IN A DATA STORAGE, AND METHOD AND APPARATUS FOR IDENTIFYING THE PRESENCE OF ONE OR MORE QUERY DATA MESSAGES**

(71) Applicant: Deutsche Telekom AG, 53113 Bonn (DE); Technische Universität München, 80333 München (DE)
(72) Inventor: GEITZ, Marc, 58089 Hagen (DE); NILESH, Kumar, 81547 München (DE); BOCHE, Holger, 10318 Berlin (DE); DEPPE, Christian, 38106 Braunschweig (DE)
(74) Representative: 2SPL Patentanwälte PartG mbB

(57) **Abstract**

Provided is a method for enrolling a data message for identification in a data storage. The method includes applying at least one challenge to a Quantum Physically Unclonable Function (QPUF) to obtain at least one quantum response. Additionally, the method includes generating a codeword for the data message based on the at least one quantum response. The method further includes storing the codeword in the data storage.

## Description

### Field

The present disclosure relates to data identification. In particular, examples of the present disclosure relate to a method and an apparatus for enrolling a data message for identification in a data storage as well as a method and an apparatus for identifying the presence of one or more query data messages with respect to one or more candidate data messages represented by one or more codewords stored in a data storage.

### Background

Modern data storage systems, such as in cloud computing and the Internet of Things (IoT), require both secure storage and efficient retrieval. Conventional encryption-based storage often necessitates full decryption to retrieve data, imposing high computational costs and latency. This may be prohibitive for resource-constrained devices.

An alternative approach is identification-based retrieval, where the system only determines if a specific message is present, providing a binary yes/no decision without recovering the entire data. Such identification protocols may significantly reduce processing and energy. This makes identification attractive for searching large databases and for edge devices with strict latency requirements.

For information-theoretic security, Physically Unclonable Functions (PUFs) may be used. These devices act as hardware fingerprints. However, classical PUFs may be vulnerable to modeling attacks by machine learning or Al. Quantum PUFs (QPUFs) overcome these limitations by using quantum states as responses, leveraging principles like the no-cloning theorem for inherent security against both classical and quantum adversaries. Even with QPUFs, care must be taken in identification protocols to ensure that an adversary cannot infer which message is being queried.

Hence, there may be a demand for improved data identification.

### Summary

This demand is met by a method for enrolling a data message for identification in a data storage as well as a method for identifying the presence of one or more query data messages with respect to one or more candidate data messages represented by one or more codewords stored in a data storage in accordance with the independent claims. Further embodiments are defined by the dependent claims.

According to a first aspect, the present disclosure provides a method for enrolling a data message for identification in a data storage. Enrolling refers to the process of preparing and registering a representation of the data message that enables its subsequent identification (recognition) within the data storage. The data message may be any set of (e.g., confidential) information, such as a bit string, for which its presence in the data storage is to be verified at a later stage. This subsequent verification is referred to as identification, which is the process of determining whether a specific query message corresponds to an enrolled message, resulting in, e.g., a binary "yes/no" decision or a "0/1" decision without revealing the full content of the message itself. The data storage may be any private (not publicly accessible) or public (publicly accessible) storage medium, such as a hard disk, a solid-state drive, a flash memory, a cloud storage or database or a distributed ledger (e.g., a blockchain).

The method comprises applying at least one challenge to a QPUF to obtain at least one quantum response. A QPUF is a physical device configured to, owing to its unique microscopic physical structure and quantum interactions, produce a unique and unpredictable output in response to a given input. The behavior of the QPUF is governed by a device-specific transformation and is rendered unclonable by the principles of quantum mechanics, such as the no-cloning theorem, and variations inherent to its manufacturing process. The at least one challenge may be a single or multiple (e.g., a sequence of) classical or quantum input signals applied to the QPUF to elicit a response. For example, the at least one challenge may be at least one classical signal (e.g., a digital signal) or at least one quantum signal (e.g., specific qubit states or photon pulses). The at least one challenge may be transmitted to the QPUF over a classical communication channel, for instance, via fiber, Ethernet or Wi-Fi. This communication may utilize standardized IT protocols such as HTTP, HTTPS, RPC, JSON or streaming protocols. When a classical challenge is received by the QPUF, the device internally converts it into a quantum state for its operation. In other words, the at least one challenge may be one or more stimuli used to query the QPUF 's unique physical properties. In response, the QPUF provides at least one quantum response - one per applied challenge. A quantum response is the resulting one or more quantum states produced by the QPUF after processing a challenge. The respective quantum response may be or indicate a single quantum state or a sequence of multiple individual quantum states. In case of multiple quantum responses for multiple applied challenges, the multiple quantum responses may form a composite quantum state such as a tensor product of multiple quantum responses. Applying a sequence of challenges to generate a corresponding sequence of quantum responses may yield a greater amount of randomness for more robust security.

Additionally, the method comprises generating a codeword for the data message based on the at least one quantum response. The at least one unique and unclonable quantum response from the QPUF serves as the physical basis for a cryptographic primitive. This quantum output is processed to create a unique, message-specific representation as the codeword. In other words, the codeword is a representation of the data message, derived from the QPUF's at least one quantum response, which is specifically structured to enable a subsequent identification check by a legitimate party who can access the same QPUF. Unlike a standard encryption, the codeword does not simply conceal the data message but instead creates a secure link between the message's identity and the unique physical properties of the QPUF. The method further comprises storing the codeword in the data storage.

The method according to the first aspect allows for enrolling the data message with a high degree of security rooted in the physical laws of quantum mechanics. By generating the codeword based on the QPUF's at least one quantum response, the method according to the first aspect ensures that the ability to perform a valid identification is intrinsically tied to the physically unclonable device. An adversary who obtains the stored codeword cannot forge a valid identification query because they cannot reproduce the required at least one quantum response without access to the original QPUF. This provides robust security against modeling attacks that can compromise classical PUFs, as any attempt to measure the QPUF's quantum state inevitably disturbs it, preventing the collection of sufficient data needed to build a predictive model. Furthermore, method according to the first aspect enables highly efficient and private membership testing, where the stored codeword allows for a simple "yes/no" check later on, avoiding the high computational cost of full decryption while ensuring the stored data reveals negligible information about the original message to an unauthorized party.

According to some examples of the present disclosure, generating the codeword comprises deriving classical cryptographic material from the at least one quantum response and generating the codeword for the data message based on the classical cryptographic material. Deriving the classical cryptographic material extracts one or more classical strings of information from the one or more quantum states indicated by the one or more quantum responses. This conversion from the quantum to the classical domain may involve performing a quantum measurement on the at least one quantum response The at least one quantum response, which is the output of the QPUF, may be physically realized in various forms. For instance, the one or more quantum states that constitute the respective quantum response may comprise photons with various encodings, states in fermionic or bosonic gases, superconducting or superfluid systems, or atomic systems. Measuring the at least one quantum response is the physical operation that interacts with these quantum states to extract a classical string of bits. This measurement collapses the quantum state into a classical outcome. One exemplary way this is performed is by using a quantum measurement followed by a Classical-Quantum Slepian-Wolf protocol to extract the classical information. The classical cryptographic material is the resulting classical information, such as one or more random bit strings, whose cryptographic properties are inherited directly from the quantum nature of the QPUF's at least one quantum response.

This conversion of the unpredictable information contained within the QPUF's at least one quantum response into a usable, classical format effectively bridges the quantum output of the QPUF with the classical computational domain. By first converting the at least one quantum response into classical cryptographic material, the subsequent generation of the codeword may be performed using computationally efficient classical operations. This avoids the need for complex quantum processing logic and allows the encoding function to be implemented on standard classical hardware, such as Field-Programmable Gate Arrays (FPGAs) or Central Processing Units (CPUs), simplifying the system architecture. Furthermore, this provides the foundation for robust security. Since the classical cryptographic material is generated from the at least one unclonable and unpredictable QPUF response, it is secret and random. As the classical cryptographic material is used to generate the codeword, these strong security properties are transferred. This ensures that the resulting codeword is securely linked to the QPUF and reveals negligible information about the data message's identity to any unauthorized party, thus achieving a high level of secrecy and privacy for the identification process.

In some examples of the present disclosure, the at least one quantum response comprises a sequence of quantum states. In these examples, deriving the classical cryptographic material comprises partitioning the sequence of quantum states into at least a first subsequence and a second subsequence. The first subsequence is a first portion of the total sequence of quantum states making up (indicated by, constituting) the at least one quantum response. Analogously, the second subsequence is a second portion of the total sequence of quantum states making up the at least one quantum response. Furthermore, deriving the classical cryptographic material comprises generating a secret key based on the first subsequence and generating common randomness based on the second subsequence. The secret key is a classical string of information derived from the first subsequence, characterized by its confidentiality. It is generated to be unknown to any third party and provides the secrecy for the codeword. Accordingly, the first subsequence is a portion of the full sequence of quantum states designated for producing the secret key, i.e., a value that remains confidential to any unauthorized party. The common randomness is a classical string of information derived from the second subsequence, designed to be a shared, identical random value between the encoder and a legitimate decoder. Accordingly, the second subsequence is a portion of the quantum response sequence used to produce a random value that can be identically reproduced by legitimate parties during enrollment and the subsequent identification phase.

The partitioning of the sequence of quantum states allows for a separation of the classical cryptographic material into two distinct functional components: one for providing secrecy and the other for carrying message-specific information. By partitioning the quantum states making up the at least one quantum response, the first subsequence may be dedicated solely to generating the secret key, which is optimized for confidentiality and is used to cryptographically secure the codeword. The second subsequence may be dedicated to generating the common randomness, which serves as a shared foundation that can be transformed in a message-dependent manner for the purpose of identification. This functional specialization allows for a robust and flexible security architecture. It ensures that the codeword is protected by a secret key derived from an independent portion of the quantum response, creating a more complex and secure cryptographic structure than using a single derived value for both functions.

According to some examples of the present disclosure, generating the codeword for the data message comprises transforming the common randomness using a message-dependent bijective mapping to generate a transformed component. In these examples, generating the codeword for the data message further comprises deriving a sub-key with increased statistical uniformity from the secret key and cryptographically combining the transformed component and the sub-key to generate the codeword.

The message-dependent bijective mapping is a one-to-one and onto function that is uniquely selected based on the specific data message being enrolled from a set of predefined bijective mappings. Applying this specific mapping to the common randomness produces the transformed component, a value that uniquely represents the combination of the common randomness and the data message's identity. The application of this specific mapping to the common randomness embeds the identity of the data message into the common randomness, i.e., a random value derived from the QPUF. Because the mapping is bijective, a legitimate party who knows the message may reverse or replicate the transformation.

To ensure the final key is cryptographically secure, the secret key undergoes processing to increase its statistical uniformity. Statistical uniformity is a property of a classical key where every possible sequence of bits has an equal probability of occurring, ensuring the key is free from predictable patterns or biases that might arise from the physical QPUF or measurement process. Processing the secret key to increase its statistical uniformity may, e.g., comprise the application of a cryptographic function such as at least one of privacy amplification or hashing to the secret key. This refinement ensures the final sub-key has high-quality randomness, which is beneficial for cryptographic security. This operation enhances the overall security by purifying the randomness of the secret key, eliminating potential vulnerabilities that could be exploited by an attacker and making the enrollment more robust against physical imperfections in the QPUF hardware.

Cryptographically combining refers to the process of merging the transformed component and the sub-key using a cryptographic operation, such as an exclusive OR (XOR) operation or modular addition. This operation securely masks the message-dependent transformed component with the high-quality randomness of the sub-key to generate the final codeword. This combination achieves secrecy for the identification process. Because the sub-key is secret and statistically uniform, the resulting codeword is statistically independent of the transformed component. This means an adversary who intercepts the publicly stored codeword cannot deduce the message-dependent information without also knowing the secret sub-key, which can only be reproduced by a legitimate party with access to the QPUF.

In some examples of the present disclosure, cryptographically combining the transformed component and the sub-key comprises bitwise XORing the transformed component and the sub-key. Bitwise XORing is a logical operation that takes two bit strings of equal length - in this case, the transformed component and the sub-key - and produces a third bit string where each output bit is the result of an exclusive OR (XOR) operation on the corresponding bits of the two input strings. This operation compares the two strings bit by bit. The output bit is 1 if the corresponding input bits are different, and 0 if they are the same, effectively scrambling the transformed component. Bitwise XORing is computationally efficient and one of the fastest logical operations available on standard classical hardware, which allows the encoding to be performed with minimal latency and computational resources. This is particularly beneficial for resource-constrained devices. Furthermore, the XOR operation is perfectly reversible. The transformed component may be recovered by performing the exact same bitwise XOR operation on the codeword and the identical sub-key. This symmetry simplifies the design of the decoding function, making it as efficient as the encoding function. This method of combination is analogous to the cryptographic principle of a one-time pad. Because the sub-key is derived from the QPUF and processed to have high statistical uniformity, it acts as a high-quality secret random key. When this key is XORed with the (non-secret) transformed component, the resulting codeword is also random and statistically independent of the transformed component. Consequently, an adversary who intercepts the stored codeword may gain no meaningful information about the message-dependent transformed component without possessing the secret sub-key, thus achieving a high level of secrecy for the identification process itself.

According to some examples of the present disclosure, the method according to the first aspect further comprises generating at least one of first helper data for reproduction of the secret key and second helper data for reproduction of the common randomness in a subsequent identification of the data message. In these examples, the method further comprises storing the at least one of the first helper data and the second helper data in the data storage together with the codeword.

The first helper data is auxiliary information created during encoding to mitigate discrepancies that may arise from the physical nature of the QPUF. The first helper data may, e.g., be generated as part of a Classical-Quantum Slepian-Wolf protocol together with the secret key. Physical systems like QPUFs may be susceptible to noise, which may cause the at least one quantum response at retrieval to be a "noisy version" of the original at least one quantum response from enrollment. The first helper data provides a mechanism to compensate for these variations. The first helper data is generated to enable that the secret key derived from the QPUF's at least one quantum response during the decoding operation matches the secret key that was originally derived during encoding. This precise alignment of the keys between encoding and decoding enables the correct recovery of the data message. The first helper data may be understood as error-correction data.

Similarly, the second helper data is auxiliary information generated from the second subsequence that enables a decoder to reliably reproduce the exact same common randomness. The second helper data provide the information for the decoder to reconcile discrepancies between the at least one quantum response obtained during enrollment and the potentially noisy response obtained during identification. The generation of the second helper data may, e.g., be part of a privacy-constrained randomness extraction protocol executed by the encoder and decoder to agree on the common randomness (common random string).

Storing the at least one of the first helper data and the second helper data together with the codeword may be implemented in different ways. In one example, data M stored in the data storage may be a single entity comprising two parts, *(M1, M2),* where M1 is or comprises the at least one of the first helper data and the second helper data and M2 is the codeword. The pair is then stored as a single entry in the data storage. Alternatively, the codeword and the at least one of the first helper data and the second helper data may be stored as separate but logically linked entries within the data storage.

In some examples of the present disclosure, the first helper data has zero mutual information with the secret key. The property that the first helper data has zero mutual information with the secret key signifies that the first helper, while beneficial for a legitimate user to accurately reconstruct the secret key, reveals absolutely no information about the value of the secret key itself. An adversary intercepting the first helper data gains no advantage in determining or guessing the secret key. This is a beneficial security feature, as it ensures that the process of error correction for the secret key does not compromise its confidentiality. The secret key remains a truly secret component, underpinning the security of the subsequent cryptographic combination. Alternatively or additionally, the second helper data is generated in these examples with bounded privacy leakage regarding the second quantum subsequence used to generate the common randomness. Generating the second helper data with bounded privacy leakage regarding the second quantum subsequence means that the amount of information the second helper data reveals about the specific quantum states of the second subsequence (from which the common randomness is derived) is strictly limited to a predefined, acceptably small level. While the second helper data is beneficial for the legitimate user to reliably reproduce the common randomness in the presence of noise, this constraint prevents an adversary from gathering enough information to, for example, create a predictive model of the QPUF's behavior concerning that subsequence. This controlled leakage is beneficial for protecting the QPUF against modeling attacks, thereby preserving its long-term physical unclonability with respect to the common randomness generation process. Together, the above conditions for the first and second helper data allow to achieve practical reliability through error correction without creating significant security vulnerabilities, thus ensuring robust and secure operation.

According to some examples of the present disclosure, generating the common randomness comprises combining the second subsequence with a sequence of states received from a public source separate from the QPUF to obtain a combined sequence. The public source separate from the QPUF is an auxiliary resource, distinct from the primary QPUF, whose output is accessible to all parties, including the encoder and any (legitimate or illegitimate) decoder. This source is utilized to augment the generation of common randomness and not for creating secret keys. The sequence of states refers to the output obtained by querying this public source, which might consist of a series of quantum states or classical random values. The combined sequence is then formed by integrating or concatenating the second subsequence (derived from the QPUF) with this sequence of states obtained from the public source. This amalgamation serves as an enlarged foundation from which the common randomness is subsequently extracted. In these examples, generating the common randomness further comprises generating the common randomness based on the combined sequence. Incorporating the public source allows to significantly increase the amount or rate of common randomness generated, compared to relying solely on the QPUF's second subsequence. This is achieved by supplementing the limited randomness from the QPUF's second subsequence with additional randomness from the readily available public source, thereby creating a larger pool for extraction. This increased common randomness directly translates to an enhanced identification capacity or a higher rate of identification. The performance boost is achieved without compromising the overall security. Since the additional randomness originates from a public source, it does not consume the QPUF's "secrecy budget" which is tied to the first subsequence used for secret key generation. The secrecy of the identification process remains dependent on the secret key from the QPUF, and the public nature of the additional source ensures it does not introduce new privacy leakage paths concerning the QPUF's core unclonable properties.

In some examples of the present disclosure, the public source is a public quantum source and the sequence of states is a sequence of quantum states. The public quantum source provides well-characterized quantum states upon request. For example, the public quantum source may be a publicly accessible source of entangled photon pairs or a quantum beacon transmitting known quantum states. The sequence of quantum states refers to the series of individual quantum-mechanical entities, such as specific qubit states or photon pulses, obtained by querying the public quantum source. Classical common randomness may subsequently be extracted from these quantum states through appropriate measurement and processing (e.g., based on a Classical-Quantum Slepian-Wolf protocol as described above for the at least one quantum response of the QPUF). Utilizing a public quantum source may provide a source of randomness with strong physical underpinnings, potentially offering a higher quality or more certifiable randomness than classical pseudo-random generators. Quantum mechanics is inherently probabilistic, and measurements performed on these public quantum states can yield fundamentally unpredictable outcomes that form the basis of the common randomness. If the public quantum source provides, for example, entangled states, the correlations observed in measurements performed by the encoder and decoder may be exploited to establish this shared randomness efficiently and robustly.

According to some examples of the present disclosure, the method according to the first aspect further comprises generating a respective codeword for at least one further data message based on the at least one quantum response and storing the respective codeword for at least one further data message in the data storage. The at least one further data message refers to one or more distinct pieces of information (e.g., one or more bit strings), separate from the initial data message. Each such further data message has its own unique, "respective" codeword generated and stored according to the principles set out above and below. This capability arises from the nature of a quantum measurement followed by a Classical-Quantum Slepian-Wolf protocol when deriving classical cryptographic material from the QPUF's at least one quantum response. The initial derivation of cryptographic material for a first data message does not necessarily exhaust all the quantum information contained within the at least one quantum response. A "post-measurement quantum state" or "leftover state" may remain, which still holds usable quantum information. This remaining state may be subsequently processed, for example, through further measurements, to derive additional classical cryptographic material (analogously to the derivation of the classical cryptographic material for the initial data message). This new set of cryptographic material is then used, following the previously established procedures, to generate a new, distinct codeword specifically for the at least one further data message. The reusability of a single set of quantum responses (comprising the one or more quantum responses) provides a significant efficiency advantage. By enabling the generation of codewords for multiple, distinct data messages based on the quantum information obtained from a single initial QPUF challenge-response instance, the method according to the first allows for the amortization of the costs associated with interacting with the QPUF (such as time and resources for challenge application and response acquisition) over several enrollment operations. Instead of requiring a new QPUF challenge cycle for every data message, the initial quantum response may be leveraged multiple times. This leads to faster enrollment cycles for subsequent data messages and reduces the overall usage of the QPUF, a distinct advantage over classical PUF systems where each enrollment typically consumes a fresh challenge-response pair.

According to a second aspect, the present disclosure provides a method for identifying the presence of one or more query data messages with respect to one or more candidate data messages represented by one or more codewords stored in a data storage. The data storage is as described above for the method according to the first aspect. The one or more query data messages are one or more specific items of information (e.g., one or more bit strings) whose existence a user intends to confirm within the data storage. The one or more candidate data messages are data items (e.g., one or more bit strings) that were previously subjected to an enrollment process and whose corresponding representations, the codewords, are stored in the data storage. The query is performed against this set of enrolled messages. The candidate data messages were enrolled as described above and below for the method according to the first aspect. The one or more candidate data messages may be all message stored in the data storage or be a subset (a portion, i.e., not all) of all messages stored in the data storage.

The method according to the second aspect comprises retrieving the one or more codewords from the data storage. For example, retrieving the one or more codewords may comprise accessing the data storage and querying the at least one codeword.

In addition, the method according to the second aspect comprises respectively applying to a QPUF, for each of the one or more query data messages, one or more challenges previously used for the QPUF during an enrollment of the respective query data message in the data storage, to obtain one or more respective quantum responses. In other words, the identical QPUF and the specific at least one challenge that were employed when the particular data message now being queried was originally enrolled are used. The respective at least one challenge may be transmitted to the QPUF analogously to what is described above for the method according to the first aspect. The identification is conditioned upon stimulating the original QPUF device with the original challenge stimulus for the respective query data message. This ensures that the QPUF produces at least one quantum response that is highly correlated with the at least one obtained during that specific message's enrollment.

The method according to the second aspect further comprises respectively decoding the one or more retrieved codewords based on the one or more respective quantum responses to generate a binary decision indicating whether the respective query data message is present in the one or more candidate data messages. If multiple query data messages are being checked, the decoding operation is performed individually for each query. For each specific query data message, its corresponding freshly obtained at least one quantum response is used to interpret or validate the information contained within, or represented by, the one or more of the retrieved codewords that represent the one or more candidate data messages. The decoding procedure is carried out for each of the one or more codewords individually, each time utilizing the at least one quantum response generated for the specific query data message against which the respective codeword is evaluated. If a single query data message is checked, its freshly obtained at least one quantum response is used to interpret or validate the information contained within, or represented by, the one or more of the retrieved codewords that represent the one or more candidate data messages. If multiple candidate codewords are being evaluated against a specific query data message, the decoding procedure is carried out for each candidate codeword individually, each time utilizing the quantum response generated for that specific query data message. The binary decision may be a definitive "yes" or "no", or "1" or "0" determination for each query data message, confirming or denying the query message's correspondence to one of the enrolled candidate data messages.

The method according to the second aspect allows to perform highly efficient membership testing, allowing a user to quickly ascertain if a specific piece of information is stored without needing to retrieve and decrypt entire datasets. The method according to the second aspect may be understood as an identification method. This is achieved because the method focuses on comparing cryptographic materials derived from QPUF responses rather than on full message decryption, outputting a simple binary answer which significantly reduces computational overhead and latency. Furthermore, the method according to the second aspect offers secure identification since only a party with access to the original QPUF and knowledge of the enrollment challenges may generate the correct quantum responses needed for decoding, an unauthorized party cannot successfully determine if a message is present. The security is linked to the unclonable nature of the QPUF's quantum output. The approach is also highly scalable, capable of supporting a very large number of distinguishable messages relative to the storage resources used. Due to the nature of the underlying identification codes employed, the number of reliably identifiable data messages may grow doubly-exponentially with the number of storage cells or resources utilized in the data storage. This doubly-exponential capacity significantly surpasses what is achievable with conventional transmission codes for the same resource footprint, making the method according to the second aspect particularly well-suited for applications involving extremely large databases where a vast number of distinct items need to be efficiently and securely checked for presence.

In some examples of the present disclosure, respectively decoding the one or more retrieved codewords comprises, for the respective query data message, deriving classical cryptographic material from the one or more respective quantum responses obtained for the query data message for the respective retrieved codeword. Deriving the classical cryptographic material on the decoding side mirrors the initial generation of such material during the enrollment of the respective candidate data message. For a specific query data message, the decoder utilizes its freshly obtained at least one quantum response to reconstruct the respective classical cryptographic material for each of the one or more retrieved codewords. The inherent properties of the QPUF ensure that this new at least one quantum response is highly correlated with the at least one original quantum response one, which allows for the regeneration of the original classical cryptographic material. In these examples, respectively decoding the one or more retrieved codewords further comprises, for the respective query data message, generating the binary decision for the query data message based on the classical cryptographic material for the respective retrieved codeword. The respectively reproduced classical cryptographic material allows to validate the specific query data message against each of the one or more retrieved codewords. This results in a symmetric and efficient design. The decoding operations, which rely on deriving and then using the respective classical cryptographic material, largely mirror the encoding operations performed during enrollment. This symmetry simplifies the overall architecture. Furthermore, once the classical cryptographic material is derived for a query data message - retrieved codeword pair from the at least one quantum response, all subsequent operations to generate the binary decision are classical computations (e.g., transformations, XORing). This maintains a clear and beneficial separation between the quantum domain (QPUF interaction) and the classical domain (decision logic), allowing the latter to be implemented efficiently on standard classical hardware. This also makes the method robust, as it hinges on the reliable regeneration of the key cryptographic components, facilitated by the QPUF's properties.

According to some examples of the present disclosure, the one or more respective quantum responses obtained for the respective query data message comprise a sequence of quantum states. In these examples, deriving the classical cryptographic material for the query data message for the respective retrieved codeword comprises partitioning the sequence of quantum states into at least a first subsequence and a second subsequence. In other words, for the specific query data message, the fresh sequence of quantum states obtained is divided into at least two distinct portions - analogously to what is described above and below for the method according to the first aspect. Deriving the classical cryptographic material for the query data message for the respective retrieved codeword further comprises in these examples reproducing a secret key for the respective retrieved codeword based on the first subsequence and respective first helper data retrieved from the data storage together with respective retrieved codeword. Reproducing the secret key refers to the derivation of the respective classical secret key from the first subsequence for each pair of query data message and retrieved codeword, guided by the first helper data. This first helper data is auxiliary information, retrieved from storage alongside the specific codeword, that was generated during the enrollment of the specific candidate data message and contains the information for error correction. Details of the first helper data are described above and below for the method according to the first aspect. The use of the first helper ensures that the secret key now derived by the decoder accurately matches the one originally used for the specific candidate message, despite any noise in the QPUF's current at least one response. Additionally, deriving the classical cryptographic material for the query data message for the respective retrieved codeword comprises in these examples reproducing common randomness for the respective retrieved codeword based on the second subsequence respective second helper data retrieved from the data storage together with respective retrieved codeword. Reproducing the common randomness involves the decoder generating a respective classical common random string from its second subsequence for each pair of query data message and retrieved codeword, aided by the second helper data. The second helper data is auxiliary information, retrieved from data storage alongside the specific codeword, that facilitates the error-corrected derivation of the common randomness, ensuring it is identical to the one established during the enrollment of the specific candidate message. Details of the second helper data are described above and below for the method according to the first aspect. The first and second helper data may be retrieved in various ways together with the codeword. For example, data *M* retrieved from the data storage may be a single entity comprising two parts, (*M*1*, M*2)*,* where *M*1 comprises (is) the first and second helper data and *M*2 is the codeword. When this pair is retrieved, both the first and second helper data and the codeword become available to the decoder. Alternatively, if the first and second helper data and the codeword were stored as separate but logically linked entries, the retrieval may involve fetching both entries.

The above allows for accurate and reliable regeneration of the essential cryptographic materials - the secret key and common randomness - even in the presence of physical QPUF noise. This is achieved by the combined use of the partitioned subsequences from the decoder's fresh quantum response and the specific helper data retrieved from the data storage. The first and second helper data provide error correction information allowing to compensate for discrepancies between the QPUF 's current (potentially noisy) at least one quantum response and the at least one QPUF response from the time of enrollment. This robust reproduction is beneficial for the overall success of the identification process. Without the accurate regeneration of these cryptographic components, subsequent comparison steps would likely fail, leading to incorrect identification results (false negatives). By ensuring these materials are faithfully reproduced, a reliable and accurate binary decision is enabled.

In some examples of the present disclosure, generating the binary decision for the respective query data message comprises selecting a bijective mapping based on the query data message. In other words, the unique bijective mapping that corresponds specifically to the current query data message is selected. The bijective mapping is selected from a set of predefined bijective mappings - analogously to the enrollment of the current query data message. In these examples, generating the binary decision for the respective query data message further comprises transforming the reproduced common randomness for the respective retrieved codeword using the selected bijective mapping to generate a test component for the respective retrieved codeword. This test component is a value calculated that represents what the respective retrieved codeword should be if the candidate message represented by the respective retrieved codeword was indeed the current query data message.

Additionally, generating the binary decision for the respective query data message comprises in these examples, deriving a sub-key for the respective retrieved codeword with increased statistical uniformity from the secret key for the respective retrieved codeword. This ensures the decoding operation possesses a high-quality key, mirroring the one used during enrollment. Generating the binary decision for the respective query data message comprises in these examples, unmasking the one or more retrieved codewords using the derived sub-key for the respective retrieved codeword to obtain a respective unmasked codeword. Unmasking involves reversing the cryptographic combination (e.g., XOR or modular addition) that was applied during the codeword's creation, thereby aiming to reveal the original transformed component that was generated for the respective candidate message at the time of its enrollment. The result of this unmasking is the unmasked codeword. Furthermore, generating the binary decision for the respective query data message comprises in these examples, comparing the test component for the respective retrieved codeword to the respective unmasked codeword to generate the binary decision for the respective query data message. The decoder's locally generated test component (derived from the query data message) is compared against the unmasked codeword (derived from the stored data). If these two values match, the binary decision is "yes" (or "1"), signifying that the query data message corresponds to the candidate data message represented by the codeword. If they do not match, the decision is "no" (or "0").

The above processing provides a precise and secure method for verification. By independently generating a test component based on the query data message and comparing it to the appropriately unmasked version of the retrieved codeword, the correspondence of the identifying information is directly verified. The use of the reproduced sub-key for unmasking ensures that only a decoder with the correct, QPUF-derived secret information can perform this validation correctly. This structured comparison is inherently robust: if the query data message differs from the actual enrolled candidate message, the selected bijective mapping will be different, leading to a mismatch and a correct "no" (or "0") decision, thus ensuring high accuracy in distinguishing messages.

According to some examples of the present disclosure, reproducing the common randomness for the respective retrieved codeword comprises combining the second subsequence with a sequence of states received from a public source separate from the QPUF to obtain a combined sequence and generating the common randomness for the respective retrieved codeword based on the combined sequence. Similar to the method according to the first aspect, the decoding operation comprises accessing the public source, which is an auxiliary resource, distinct from the primary QPUF, whose output is available to all parties and is specifically used to augment the generation of common randomness. For example, the public source may be queried to obtain the sequence of states, which may, e.g., be quantum or classical values, following the same protocol or schedule that was employed by during the enrollment of the candidate message. The combined sequence may, e.g., be formed by amalgamating the second subsequence (derived from the fresh QPUF response obtained for the query data message) with the sequence of states from the public source. From this combined sequence, and with the aid of the second helper data for error correction, the common randomness may be generated (reproduced).

In some examples of the present disclosure, the public source is a public quantum source and the sequence of states is a sequence of quantum states. Using a public quantum source may ensure consistency in reproducing the high-quality, quantum-originated component of the common randomness. By both encoding and decoding operation using quantum states from the same public quantum source, they leverage the same physical phenomena for generating this portion of their shared randomness. This consistent approach allows to faithfully reconstruct the common randomness that was augmented using these quantum states during the enrollment phase. Consequently, the benefits associated with using a quantum source for this public randomness component - such as potentially stronger correlations or more efficient randomness extraction if phenomena like entanglement are exploited - are preserved throughout the entire identification protocol. This enables to correctly process codewords that were based on this quantum-augmented common randomness, during identification, fully supporting the enhanced identification capacity or rate without affecting the secrecy derived from the private QPUF's first subsequence.

According to some examples of the present disclosure, the one or more query data messages is one query data message and the one or more retrieved codewords is one (i.e., a single) codeword representing one (a single) candidate data message. In other words, it is determined if a single query data message corresponds to a single enrolled candidate data message, which is represented by the single codeword retrieved from the data storage. This one-to-one check may be understood as a 1-ldentification.

In alternative examples of the present disclosure, the one or more query data messages are multiple query data messages and the one or more retrieved codewords is one codeword representing one candidate data message. In other words, it is determined for multiple query data messages if it corresponds to a single enrolled candidate data message, which is represented by the single codeword retrieved from the data storage. Each of the multiple query data messages is evaluated against this single enrolled candidate data message. This allows to efficiently check multiple potential identifiers (the query messages) against one specific, known enrolled entity (the candidate message). This is particularly useful in scenarios where a single stored record or item of interest needs to be cross-referenced against a list of various search terms, aliases, or potential matches. For instance, one might check if any name from a list of suspects matches a particular account holder on record. Granular results are provided, yielding a separate binary "yes/no" decision for each query data message, clearly indicating which, if any, of the multiple queries match the single candidate. This one-to-multiple check may be understood as a first K-Identification alternative.

In alternative examples of the present disclosure, the one or more query data messages is one query data message and the one or more retrieved codewords are multiple codeword representing respective ones of multiple candidate data messages. In other words, a search or lookup for a single, specific query data message within a larger collection of multiple candidate data messages is performed. Each of these candidate data messages has been previously enrolled and is uniquely represented by its own distinct codeword - these are the multiple codewords retrieved from the data storage for the purpose of this search. This allows to facilitate efficient and secure searches for a specific item within a potentially large database of enrolled entries. A targeted check of query-specific information against each candidate's stored representation in a one-by-one fashion is enabled. Furthermore, the granular results are provided by generating a distinct binary decision for each query-candidate pair, allowing a user to know exactly which of the multiple candidate messages, if any, correspond to their single query data message. This may then be aggregated to an overall "found" or "not found" status if desired. This one-to-multiple check may be understood as a second K-Identification alternative.

According to a third aspect, the present disclosure provides an apparatus for enrolling a data message for identification in a data storage. The apparatus comprises a QPUF. In addition, the apparatus comprises processing circuitry configured to apply at least one challenge to the QPUF to obtain at least one quantum response. The processing circuitry may be a dedicated hardware circuit, such as an Application-Specific Integrated Circuit (ASIC), or a function executed on a general-purpose processor like a CPU or Graphics Processor Unit (GPU). The apparatus further comprises an encoder configured to generate a codeword for the data message based on the at least one quantum response. The encoder is a functional unit, which may be implemented in hardware or software. The encoder may be implemented on classical systems such as FPGAs, CPUs, or GPUs, or on quantum computing systems. Additionally, the apparatus comprises an interface configured to store the codeword in the data storage. The interface may be a hardware or software component. For example, this may be a network interface for communicating with an external public data storage or a driver for writing to internal flash memory of the apparatus. In other words, the data storage may be internal or external to the apparatus. The various components of the apparatus, including the processing circuitry, encoder and interface, may be realized as separate physical devices connected via interfaces, or as integrated sub-elements or software-defined functions within a single device. The apparatus according to the third aspect may be a standalone device (i.e., be provided in a standalone housing) or be for integration into a user device such as a laptop or server. Analogously to the method according to the first aspect, the apparatus according to the third aspect allows for enrolling the data message with a high degree of security and enables highly efficient and private membership testing.

According to a fourth aspect, the present disclosure provides an apparatus for identifying the presence of one or more query data messages with respect to one or more candidate data messages represented by one or more codewords stored in a data storage. The apparatus comprises a QPUF. In addition, the apparatus comprises an interface configured to retrieve the one or more codewords from the data storage. The interface may be a hardware or software component. For example, this may be a network interface for communicating with an external public data storage or a driver for reading from internal flash memory of the apparatus. In other words, the data storage may be internal or external to the apparatus. The apparatus further comprises processing circuitry configured to respectively apply to the QPUF for each of the one or more query data messages, one or more challenges previously used for the QPUF during an enrollment of the respective query data message in the data storage, to obtain one or more respective quantum responses. The processing circuitry may be a dedicated hardware circuit, such as an ASIC, or a function executed on a general-purpose processor like a CPU or GPU. Additionally, the apparatus comprises a decoder configured to respectively decode the one or more retrieved codewords based on the one or more respective quantum responses to generate a binary decision indicating whether the respective query data message is present in the one or more candidate data messages. The decoder is a functional unit, which may be implemented in hardware or software. The decoder may be implemented on classical systems such as FPGAs, CPUs, or GPUs, or on quantum computing systems. The various components of the apparatus, including the processing circuitry, decoder and interface, may be realized as separate physical devices connected via interfaces, or as integrated sub-elements or software-defined functions within a single device. The apparatus according to the fourth aspect may be a standalone device (i.e., be provided in a standalone housing) or be for integration into a user device such as a laptop or server. Analogously to the method according to the second aspect, the apparatus according to the fourth aspect allows to perform highly efficient membership testing and secure identification.

According to a fifth aspect, the present disclosure provides a non-transitory machine-readable medium having stored thereon a program having a program code for performing the method according to the first aspect or the second aspect, when the program is executed on a processor or a programmable hardware.

According to a sixth aspect, the present disclosure provides a program having a program code for performing the method according to the first aspect or the second aspect, when the program is executed on a processor or a programmable hardware.

### Brief description of the Figures

Some examples of apparatuses and/or methods will be described in the following by way of example only, and with reference to the accompanying figures, in which
Fig. 1 illustrates a flowchart of an example of a method for enrolling a data message for identification in a data storage;
Fig. 2 illustrates an example of an apparatus for enrolling a data message for identification in a data storage;
Fig. 3 illustrates a first exemplary data flow for enrolling a data message for identification in a data storage;
Fig. 4 illustrates a second exemplary data flow for enrolling a data message for identification in a data storage;
Fig. 5 illustrates a third exemplary data flow for enrolling a data message for identification in a data storage;
Fig. 6 illustrates a flowchart of an example of a method for identifying the presence of one or more query data messages;
Fig. 7 illustrates an example of an apparatus for identifying the presence of one or more query data messages;
Fig. 8 illustrates a first exemplary data flow for identifying the presence of one or more query data messages;
Fig. 9 illustrates a second exemplary data flow for identifying the presence of one or more query data messages;
Fig. 10 illustrates a third exemplary data flow for identifying the presence of one or more query data messages
Fig. 11 illustrates an exemplary cellular system using the proposed identification protocol;
Fig. 12 illustrates an exemplary apparatus for enrolling and identifying the presence of data messages;
Fig. 13 illustrates an exemplary user device comprising an integrated apparatus for enrolling and identifying the presence of data messages; and
Fig. 14 illustrates an exemplary monolithic user device comprising an apparatus for enrolling and identifying the presence of data messages.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A or B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

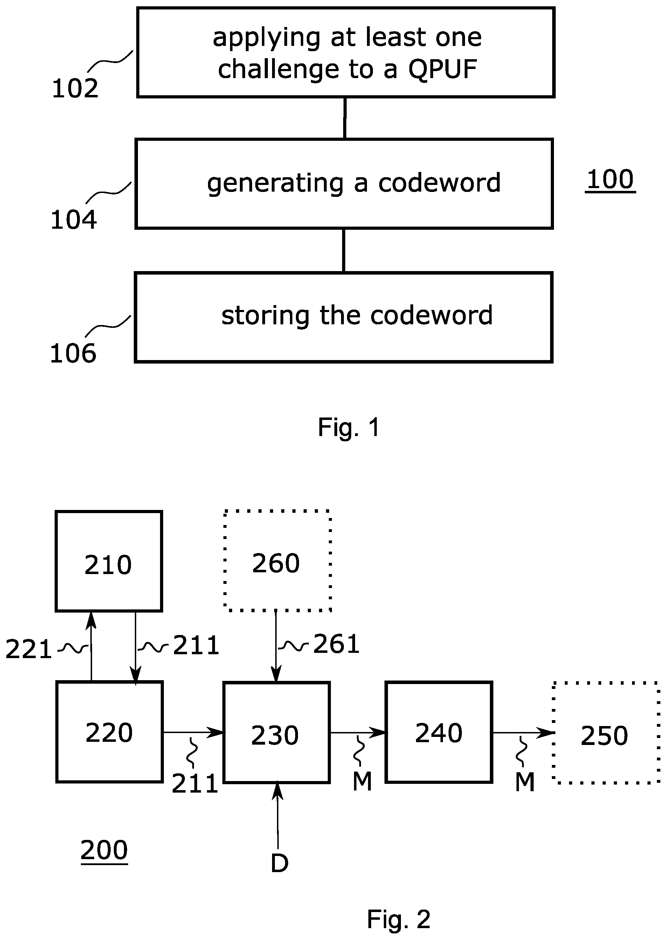

**Fig. 1** illustrates a flowchart of an exemplary method 100 for enrolling a data message for identification in a data storage. The method 100 comprises applying 102 at least one challenge to a QPUF to obtain at least one quantum response. Additionally, the method 100 includes generating 104 a codeword for the data message based on the at least one quantum response. The method 100 further includes storing 106 the codeword in the data storage.

The method 100 allows for enrolling the data message with a high degree of security rooted in the physical laws of quantum mechanics. The method 100 ensures that the ability to perform a valid identification is intrinsically tied to the QPUF. An adversary who obtains the stored codeword cannot forge a valid identification query because they cannot reproduce the required at least one quantum response without access to the original QPUF. Furthermore, method 100 enables highly efficient and private membership testing, where the stored codeword allows for a simple "yes/no" check later on, avoiding the high computational cost of full decryption while ensuring the stored data reveals negligible information about the original message to an unauthorized party.

More details and aspects of the method 100 are explained in connection with the proposed technique or one or more examples described above or below. The method 100 may comprise one or more additional optional features corresponding to one or more aspects of the proposed technique or one or more examples described or below.

In particular, further details of the method 100 will be described in the following with reference to **Fig. 2** illustrating a corresponding apparatus 200 for enrolling a data message *D* for identification in a data storage 250. For example, the data message *D* may be a confidential message, which belongs to a set *D.* The data message *D* may, e.g., be a bit string. The data message *D* may be received from a data source (not illustrated in Fig. 2).

The data storage 250 may be internal or external to the apparatus 200. The data storage 250 may in some examples be a public (publicly accessible) data storage such as a cloud storage or database, a key-value store or a blockchain. In other examples, the data storage 250 may be a private (not publicly accessible) data storage such as a hard disk, a solid-state drive or a flash memory internal to the apparatus 200.

The apparatus 200 comprises a QPUF 210. The QPUF 210 is a physical device with an internal quantum architecture that produces outputs in response to input challenges. The behavior of the QPUF 210 is determined by its unique physical structure (e.g., nanoscale quantum dots or defects) and quantum interactions. When a challenge (input) is applied to the QPUF 210, it undergoes some fixed (e.g., unitary) transformation (specific to the device) and yields one or more resulting quantum states (the quantum response). Crucially, due to manufacturing variations and the quantum no-cloning principle, this challenge-response behavior is unique and cannot be duplicated by an adversary. The challenge may itself be a classical or quantum signal. The QPUF 210 outputs one or more quantum states that may be subsequently measured to extract classical or quantum information. In practice, only legitimate parties have access to the QPUF device 210 at enrollment (and retrieval), whereas an adversary does not.

Given a classical challenge *C*, the QPUF 210 outputs at least one quantum state ρ*_{X}* over some Hilbert space. The responses are inherently random and unclonable. ${ρ}_{X}^{⊗ n}$ denotes the tensor product of n such responses obtained by applying a challenge sequence *Cⁿ* (an enrollment sequence) and will be denoted as "quantum state" in the following. When the same or a related challenge is later applied, the QPUF 210 produces a correlated state ${ρ}_{Y}^{⊗ n}$ (accessible to the legitimate decoder and can be considered as noisy version of ${ρ}_{X}^{⊗ n}$) and possibly ${ρ}_{Z}^{⊗ n}$ to an adversary (if leakage is unavoidable, e.g. due to imperfect shielding). The joint statistics of ( ${ρ}_{X}^{⊗ n} , {ρ}_{Y}^{⊗ n} , {ρ}_{Z}^{⊗ n}$)are governed by the physical QPUF characteristics (e.g., as in a quantum wiretap channel model). The encoder of a trusted party may fully measure or store ${ρ}_{X}^{⊗ n}$ during enrollment, while the decoder applies a quantum measurement to ${ρ}_{Y}^{⊗ n}$ during retrieval. The n superscript indicates that possibly many uses (n channel uses) or many qubits may be involved. The adversary, lacking access to the QPUF 210, cannot reproduce ${ρ}_{X}^{⊗ n}$ or learn a key derived from it without access to the QPUF 210.

In addition, the apparatus 200 comprises processing circuitry 220 configured to apply at least one challenge 221 to the QPUF 210 to obtain at least one quantum response 211 from the QPUF 210. The at least one challenge 221 may be a single or a sequence of classical or quantum input signals applied to the QPUF 210. The at least one challenge may be transmitted to the QPUF 210 over a classical communication channel, for instance, via fiber, Ethernet or Wi-Fi. This communication may utilize standardized IT protocols such as HTTP, HTTPS, RPC, JSON or streaming protocols. The processing circuitry 220 may be a dedicated hardware circuit, such as an ASIC, or a function executed on a general-purpose processor like a CPU or GPU.

The apparatus 200 further comprises an encoder 230 configured to generate a codeword M for the data message *D* based on the at least one quantum response 211. The encoder 230 may be implemented in hardware or software. The encoder 230 may be or run on a classical system such as an FPGA, a CPU or a GPU.

The at least one quantum response 211 generated by the QPUF 210 may be transmitted to the encoder 230 via a quantum communication channel, which is not shown in detail in Fig. 2 but is indicated schematically by the arrow pointing from the QPUF 210 towards the processing circuitry 220. The particular realization of this quantum channel depends on the specific design and implementation of the QPUF 210. For instance, in a photonic QPUF implementation, the quantum channel may comprise optical components such as dark fiber connections, beam splitters, polarizing beam splitters, phase shifters, delay lines and single-photon detectors, facilitating secure and low-loss transmission of quantum states. Alternatively, the at least one quantum response may be digitized immediately at the output interface of the QPUF 210, resulting in one or more classical signals transferred to the encoder 230. While this latter approach involves the transmission of sensitive quantum-derived information in an unsecured classical channel between the QPUF 230 and encoder 230, it may still be viable if the QPUF 210 and the encoder 230 are arranged securely within a common housing, limiting potential security risks from adversarial interference.

In general, the quantum channel may be established either directly between the QPUF 210 and the encoder 230 or between the QPUF 210 and an intermediate component, such as the processing circuitry 220 illustrated in Fig. 2. A direct quantum channel between the QPUF 210 and the encoder 230 may, for example, be used if the quantum response is not digitized immediately at the output of the QPUF 210. Conversely, a channel to an intermediate element, such as the processing circuitry 220, may be used if the quantum response is digitized immediately at the output interface of the QPUF 210.

Each data message *D* is associated with a codeword in an identification code as will be described below in greater. For example, an alphabet *V* of storage symbols and *k* storage cells in the data storage 250 may be used. The encoder 230, using at least one fresh QPUF response, assigns to each message *D* a unique sequence of *k* symbols *in V^{k}* as the respective codeword. These codewords are effectively chosen from a codebook with size double-exponential in *k*, enabling an extremely large number of messages to be encoded.

When generating the codeword *M*, the encoder 230 may be configured to derive classical cryptographic material from the at least one quantum response 211 and to generate the codeword *M* for the data message *D* based on the classical cryptographic material. The at least one quantum response 211 comprises a sequence of quantum states.

When deriving the classical cryptographic material, the encoder 230 may be configured to partition the sequence of quantum states into at least a first subsequence and a second subsequence. The encoder 230 may be further configured to generate a secret key based on the first subsequence and to generate common randomness based on the second subsequence. For example, a legitimate party may trigger the processing circuitry 220 to apply an n-symbol challenge to the QPUF 210 and obtain two correlated quantum states, denoted as ${ρ}_{X}^{n}$ and ${ρ}_{Y}^{n}$ at enrollment (and also later at retrieval). For purposes of common randomness and secret-key generation, the state pair may be partitioned into two subsequences ${ρ}_{X}^{{n}_{1}} {ρ}_{Y}^{{n}_{1}}$ and ${ρ}_{X}^{{n}_{2}} {ρ}_{Y}^{{n}_{2}}$, where $n _ 1 = \left⌈{c}_{1}\sqrt{n}\right⌉$ for some constant *c*₁ > 0, and *n*₂ = *n - n*₁*.* The values of *c*₁ and the resulting subsequence lengths may, e.g., be chosen to satisfy the trade-off *c*₁ > $\frac{1}{\sqrt{ρ}} \frac{lov \left|V\right|}{I \left({X}^{n};\left.{Y}^{n}\right|{T}^{n}\right) - I \left({X}^{n};\left.{Z}^{n}\right|{T}^{n}\right) - ϵ} + ε$, ensuring a positive rate for common randomness and secret-key extraction. Here ρ is the number of quantum state outputs required for each storage cell. *Xⁿ* and *Yⁿ* are the quantum systems denoting the QPUF outputs at enrollment and retrieval phase respectively. *T* is an auxiliary random variable representing any internal randomness in the encoding, that depends on *Xⁿ*. *ε* goes to zero asymptotically.

From the second subsequence pair ( ${ρ}_{X}^{{n}_{2}} , {ρ}_{Y}^{{n}_{2}}$), the encoder 230 and a decoder used for the identification phase may execute a privacy-constrained randomness extraction protocol to agree on a common random string S_{cr}.

Additionally, helper data *M*_{cr} may be produced and stored in *k*_{cr} of *k* available storage cells of the data storage 250, where ${k}_{cr} = k - \left⌈{c}_{2}\sqrt{k}\right⌉ - \left⌈\sqrt{k}\right⌉$ and ${c}_{2} \geq \left({logd}_{X}+ϵ\right) \frac{{c}_{1} \sqrt{ρ}}{log \left|V\right|}$. This guarantees $\frac{1}{k} I \left({M}_{cr}; {X}^{n}\right) \leq I \left(T; X\right) - I \left(X;\left.Y\right|T\right)$ and $\frac{1}{k} H \left({S}_{cr}\right) \geq \frac{1}{k} log \left|{S}_{cr}\right| - ε$, thereby bounding privacy leakage to *L +* ε and assuring sufficient randomness. *d_{X}* denotes the dimension of the quantum system representing the at least one QPUF response at the encoding. In other words, the encoder 230 may be configured to generate helper data for reproduction of the common randomness in a subsequent identification of the presence of the data message in the data storage 250 such that the helper data *M*_{cr} are generated with bounded privacy leakage regarding the second quantum subsequence used to generate the common randomness.

From the first subsequence pair $\left({ρ}_{X}^{{n}_{1}}, {ρ}_{Y}^{{n}_{1}}\right)$, a conventional Classical-Quantum Slepian-Wolf-based secret key extraction protocol may be performed to produce the secret key *S*ₛₖ and corresponding helper data *M*ₛₖ. The helper data is stored in ${k}_{sk} = \left⌈{c}_{2}\sqrt{k}\right⌉$ storage cells of the data storage 250, with |*M*ₛₖ| ≤ |*V*|^{*k*ₛₖ}*.* In other words, the helper data *M*_{cr} and the helper data *M*ₛₖ are stored in the data storage 250 together with the codeword *M*. The extraction ensures that the helper data *M*ₛₖ have zero mutual information with the secret key *S*ₛₖ, i.e., *I*(*M*ₛₖ; *S*ₛₖ) = 0, and negligible error in key agreement.

When generating the codeword *M* for the data message *D,* the encoder 230 may be configured to derive a sub-key with increased statistical uniformity from the secret key. For example, of the remaining $\left⌈\sqrt{k}\right⌉$ free storage cells of the data storage 250, the additional sub-key *S̅ₛₖ* may be derived from *S*ₛₖ via a randomized mapping *h*(·) such that $\left|{\overline{S}}_{sk}\right| = {\left|V\right|}^{\left⌈\sqrt{k}\right⌉} , I \left({M}_{sk}; {\overline{S}}_{sk}\right) =$= 0 and the probability of mapping to a dummy symbol is arbitrarily small (< δ), thereby ensuring uniformity of *S̅ₛₖ.*

When generating the codeword *M* for the data message *D,* the encoder 230 may further be configured to transform the common randomness using a message-dependent bijective mapping to generate a transformed component and to cryptographically combine the transformed component and the sub-key to generate the codeword M.

For example, for each message *D* ∈ *D* to be enrolled, an encoder mapping *E_{D}*: *Xⁿ* ↦ *U^{k}* may be defined by *E_{D}*(*Xⁿ*) *= b*₂(*b*₁(*T_{D}*(*S*_{cr}))⊕ *S̅ₛₖ, M*_{cr}*, M*ₛₖ), where
U represents a uniformly distributed random variable,
${T}_{D} : {S}_{cr} \to {U}^{\left⌈\sqrt{k}\right⌉}$ are bijective mappings chosen per message,
${b}_{1} : {U}^{\left⌈\sqrt{k}\right⌉} \to {S}_{sk}$ is a fixed bijection, and
${b}_{2} : {M}_{cr} \times {S}_{sk} \times {M}_{sk} \to {U}^{k}$ is an arbitrary bijection into a subset *A* ⊆ *U^{k}.*

In this example, the encoder 230 thus writes the *k*-symbol codeword *E_{D}*(*Xⁿ*) into the data storage 250. In other words, the encoder 230 writes the codeword of each desired message *D* into the *k* cells of the data storage (e.g., one symbol per cell). A user does not need to know all codewords, (only) the data storage 250 stores them.

As indicated above, the encoder 230 may be configured to combine the transformed component *b*₁(*T_{D}*(*S*_{cr})) and the sub-key *S̅ₛₖ* by bitwise XORing the transformed component *b*₁(*T_{D}*(*S*_{cr})) and the sub-key *S̅ₛₖ*. Other techniques such as modular addition may be used instead of XORing.

The apparatus 200 comprises an interface 240 configured to store the codeword M in the data storage 250. The interface 240 may be a hardware or software component. For example, if the public storage 250 is an external public data storage, the interface 240 may be a network interface for communicating with the external public data storage. If the public storage 250 is an internal private data storage, the interface 240 may, e.g., be a driver for writing the codeword M in the internal data storage of the apparatus 200.

As described above, the encoding is done such that no single party (except a legitimate decoder with access to the QPUF 210) is able to learn extra information about which messages are actually present beyond what an identification query reveals.

The processing circuitry 220, the encoder 230 and the interface 240 may be realized as separate physical devices connected via interfaces, or as integrated sub-elements or software-defined functions within a single device. The apparatus 200 may be a standalone device (i.e., be provided in a standalone housing) or be for integration into a user device such as a laptop or server.

Analogously to the method 100, the apparatus 200 allows enroll the data message *D* with a high degree of security in the data storage 250.

Many messages may be stored and later a query may ask whether a particular message *D̅* is among them. The encoder 230 does not know in advance which message will be queried. For example, a collection of data messages {D} that may be stored (for example, a large set of possible data) may be initially selected.

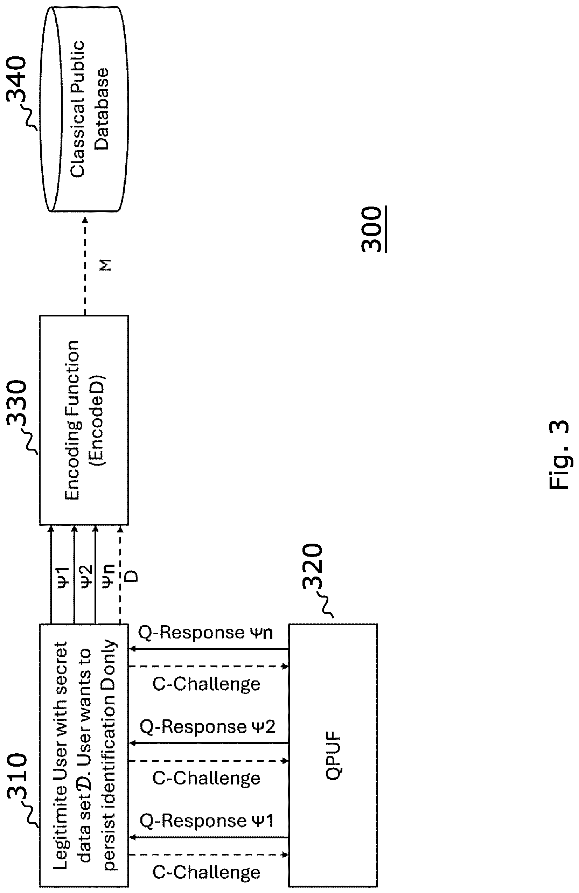

**Fig. 3** additionally illustrates an exemplary data flow 300 for enrolling the data message *D* in a data storage, which is depicted as a classical public database 340 in the example of Fig. 3.

A legitimate user 310 triggers that the QPUF 320 is queried n times, i.e., a chosen challenge sequence is applied to the QPUF 320 to obtain n quantum responses *ψ*1, *ψ*2, ..., *ψn* which represent a quantum state. The quantum state is processed by the encoding function 330 together with the data message *D* to form an identification message *M* as codeword (e.g., by XORing the transformed component which is based on the data message *D* with a one-time pad derived from the quantum state). Then, the codeword *M* is stored in (written to) the public database 340.

During the enrollment phase, for each possible message in the set *D* to be stored, the QPUF 320 is queried to encode and store it in the public database 340 (the number of messages may be extremely large since only membership is tested subsequently).

As described above, the identification code used for the codeword *M* may be constructed by using the at least one quantum response of the QPUF 320 to generate common randomness and hash the data messages, providing quantum secrecy. Accordingly, one may reliably check for the presence of an unknown message in a large database with minimal leakage and much lower cost than decrypting the entire contents.

The above described enrollment of data messages may be expanded by additionally using a public source for the generation of the common randomness. As indicated in Fig. 2, the encoder 230 may optionally have access to a public source 260 and be configured to query the public source 260 separate from the QPUF 210 to obtain a sequence of states 261. For example, the public source 260 may be a public quantum source and the sequence of states may be a sequence of quantum states. The encoder 230 may further be configured to combine the second subsequence with the sequence of states 261 received from the public source 260 and accordingly generate the common randomness based on the combined sequence. For each codeword creation, the encoder 230 may draw symbols from the public source 260. Since the public source 260 is public, its outputs cost no privacy (no part of the secrecy budget is spent).

For example, the encoder 230 may be configured to split the common randomness into two parts based on a time-sharing parameter α with 0 ≤ α ≤ 1. Accordingly, an α fraction of each codeword's symbols is generated using at least one fresh QPUF response (as before), and the remaining (1 - α) fraction is drawn from the public source 260. For example, one might query the QPUF to get ${ρ}_{X}^{⊗ \left⌈αn\right⌉}$ which yields symbols for the first portion of common randomness, and sample another state ${ρ}_{X}^{⊗ n - \left⌈αn\right⌉}$ from the public source 260 for the rest. The combination (concatenation) of these parts forms the common randomness for enrolling each data message. By incorporating public randomness, the codebook size may be effectively expanded without sacrificing secrecy and privacy as the secrecy and privacy still relies on the QPUF-based portion.

The inclusion of the public source 260 increases the effective randomness available for encoding, enabling an even larger set of identifiable data messages. In practice, as long as the QPUF 210 is able to generate a small positive amount of secret key per block, the secure identification capacity is not reduced. Rather, one gains in the number of identifiable messages. Thus, the inclusion of the public source 260 allows flexible trade-offs, where α may be tuned: setting α = 1 reduces to the QPUF-only scheme described above, while α < 1 leverages more public randomness for capacity.

The outputs of the public source 260 are public and do not leak information about the input(s) to the QPUF 210. They are used to generate shared randomness (for example, a common random mask on the codeword), which may only help the legitimate parties and cannot be exploited by the adversary to infer the data message *D*. Hence, secrecy against the adversary is maintained.

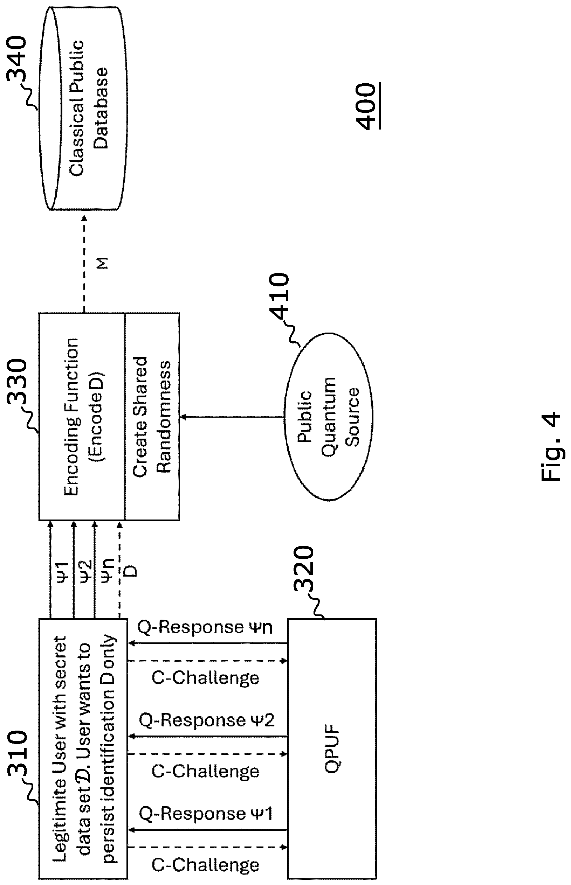

**Fig. 4** additionally illustrates an exemplary data flow 400 enhancing the data flow 300 with an additional public source, which is depicted as a quantum public source 410 (e.g., a publicly accessible entangled source or quantum beacon) in the example of Fig. 4.

To establish common randomness with the decoding function in the subsequent identification phase, the encoding function 330 receives quantum states from the external public quantum source 410. The public quantum source 410 is available to both the encoding function 330 and the decoding function.

This public quantum source 410 provides known quantum states that both the encoding function 330 and the decoding function use to extract shared randomness, independently of the QPUF 320. Since the source is public, it does not introduce extra secrecy, but it allows both the encoding function 330 and the decoding function to coordinate more efficiently. As described above, enrollment may be done by time-sharing: a portion of each QPUF quantum response (*α* fraction of symbols) and the remainder from the public source 410 may be jointly used in the common randomness to encode messages in the database 340. By combining these two sources of randomness, the identification capacity may be further increased without reducing secrecy.

As described above, the additional public quantum source 410 may increase the achievable identification rate without increasing leakage - a departure from classical information theory (where public randomness does not improve secure transmission capacity). This is because the new source furnishes genuine common randomness (e.g., quantum-entangled or classically correlated) without additional privacy cost, and it may be tailored into the coding to boost distinguishability of legitimate codewords. In practice, this means that the proposed identification protocol may support even more data messages (or higher reliability) when supplemented by such a common (quantum) resource, while still guaranteeing negligible information gain to an eavesdropper.

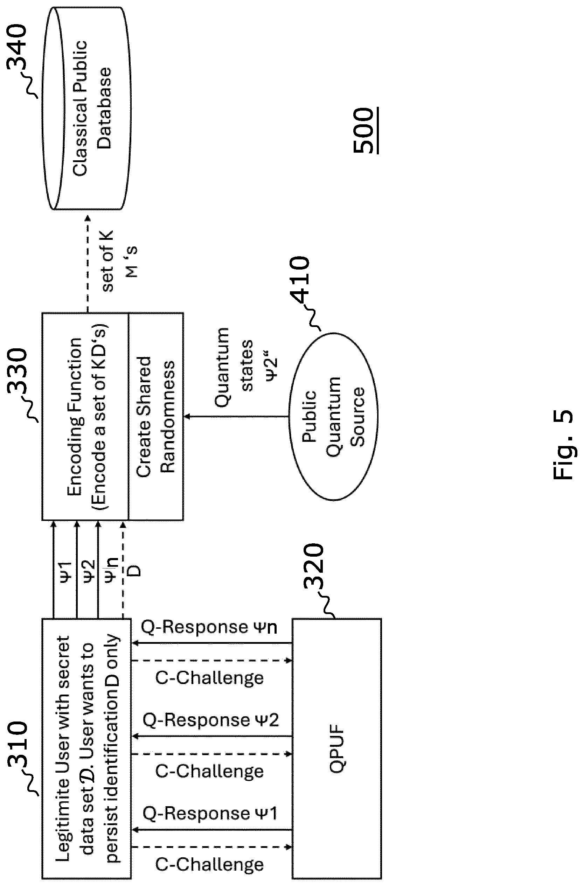

As described above, the proposed enrollment technique may be used for enrolling multiple, e.g., *K* ≥ 1, data messages. **Fig. 5** exemplarily illustrates a corresponding data flow 500 enhancing the data flows 300 and 400 described above.

In this example, a set of *K* data messages is encoded using the QPUF 320 for enrollment in the public database 340. The use of the public quantum source 410 is not mandatory as described above with reference to Figs. 3 and 4. For example, a set of *K* candidate (target) data messages for K-identification may be stored in the public database 340 with the data flow 500. All *K* data messages are stored as described above in the public database 340 without knowing which message will be queried.

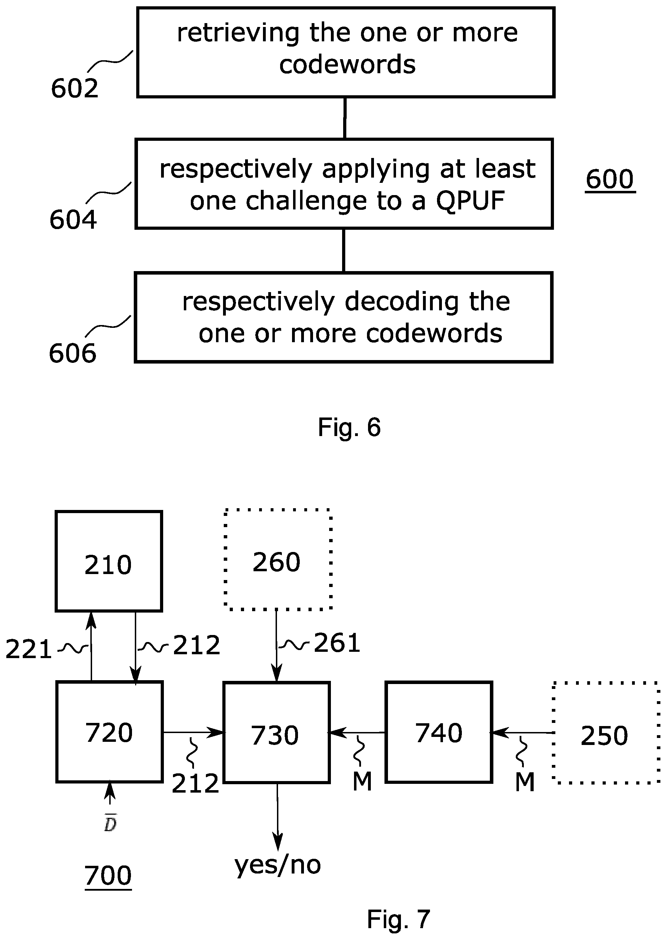

In addition to the enrollment phase described above with reference to Figs. 1 to 5, the proposed identification protocol further comprises an identification (or retrieval) phase. The identification phase will be described in greater detail in the following with reference to Figs. 6 to 11.

**Fig. 6** illustrates a flowchart of an exemplary method 600 for identifying the presence of one or more query data messages with respect to one or more candidate data messages represented by one or more codewords stored in a data storage. The method 600 comprises retrieving 602 the one or more codewords from the data storage. In addition, the method 600 comprises respectively applying 604 to a QPUF, for each of the one or more query data messages, one or more challenges previously used for the QPUF during an enrollment of the respective query data message in the data storage, to obtain one or more respective quantum responses. The method 600 further comprises respectively decoding 606 the one or more retrieved codewords based on the one or more respective quantum responses to generate a binary decision indicating whether the respective query data message is present in the one or more candidate data messages.

The method 600 allows to perform highly efficient membership testing, allowing a user to quickly ascertain if a specific piece of information is stored without needing to retrieve and decrypt entire datasets. This is achieved because the method 600 focuses on comparing cryptographic materials derived from QPUF responses rather than on full message decryption, outputting a simple binary answer which significantly reduces computational overhead and latency. Furthermore, the method 600 offers secure identification since only a party with access to the original QPUF and knowledge of the enrollment challenges is able to generate the correct quantum responses needed for decoding, an unauthorized party cannot successfully determine if a data message is present. The method 600 is also highly scalable, capable of supporting a very large number of distinguishable messages relative to the storage resources used. For example, the number of reliably identifiable data messages may grow doubly-exponentially with the number of storage cells or resources utilized in the data storage, making the method 600 particularly well-suited for applications involving extremely large databases where a vast number of distinct items need to be efficiently and securely checked for presence.

More details and aspects of the method 600 are explained in connection with the proposed technique or one or more examples described above or below. The method 600 may comprise one or more additional optional features corresponding to one or more aspects of the proposed technique or one or more examples described or below.

In particular, further details of the method 600 will be described in the following with reference to **Fig. 7** illustrating a corresponding apparatus 700 for identifying the presence of one or more query data messages *D̅* with respect to one or more candidate data messages represented by one or more codewords *M* stored in the data storage 250. The candidate data messages, the query data messages and optionally further data messages were previously enrolled in the data storage 250 according to the enrollment procedure described above with reference to Figs. 1 to 5.

The apparatus 700 comprises the QPUF 210 described above.

In addition, the apparatus 700 comprises an interface 740 configured to retrieve the one or more codewords *M* from the data storage 250. The one or more codewords *M* were generated and stored in the data storage 250 during the enrollment procedure as described above with reference to Figs. 1 to 5. For example, the interface 740 may access the data storage 250 and query the one or more codewords *M*. The interface 740 may be a hardware or software component - analogously to the interface 240 of the apparatus 200.

The apparatus 700 further comprises processing circuitry 720 configured to respectively apply to the QPUF 210 for each of the one or more query data messages *D̅*, one or more challenges 221 previously used for the QPUF 210 during the enrollment of the respective query data message *D̅* in the data storage 250, to obtain one or more respective quantum responses 212. In other words, the identical QPUF 210 and the specific at least one challenge 221 that were employed when the particular data message now being queried was originally enrolled are used. The processing circuitry 720 may be implemented similar or identical to the processing circuitry 220 described above and be configured to transmit the at least one challenge 221 for each of the one or more query data messages *D̅* to the QPUF 210 analogously to what is described above for the apparatus 200.

Additionally, the apparatus 700 comprises a decoder 730 configured to respectively decode the one or more retrieved codewords *M* based on the one or more respective quantum responses 212 to generate a binary decision indicating whether the respective query data message *D̅* is present in the one or more candidate data messages. The binary decision may be a definitive "yes" or "no", or "1" or "0" determination for each query data message *D̅*, confirming or denying the query message *D̅*'s correspondence to one of the enrolled candidate data messages. The decoder 730 may be implemented in hardware or software. The encoder 730 may be or run on a classical system such as a FPGA, a CPU or a GPU.

The one or more respective quantum responses 212 generated by the QPUF 210 during decoding may be transmitted to the decoder 730 via a quantum communication channel. This quantum channel is not shown in detail in Fig. 7 but is indicated schematically by the arrow pointing from the QPUF 210 towards the processing circuitry 720. The particular realization of this quantum channel depends on the specific design and implementation of the QPUF 210. Analogously to the encoding described above, for a photonic QPUF implementation, the quantum channel on the decoding side may comprise optical components such as dark fiber connections, beam splitters, polarizing beam splitters, phase shifters, delay lines, and single-photon detectors, ensuring secure and low-loss transmission of quantum states.

Alternatively, the one or more respective quantum responses 212 may be digitized immediately at the output interface of the QPUF 210, resulting in one or more classical signals transferred to the decoder 730. Although this approach involves the transmission of sensitive quantum-derived information via an unsecured classical channel between the QPUF 210 and decoder 730, security may still be maintained if the QPUF 210 and the decoder 730 are arranged securely within a common housing, limiting potential risks of adversarial interference.

In general, the quantum channel may be established either directly between the QPUF 210 and the decoder 730 or between the QPUF 210 and an intermediate component, such as the processing circuitry 720 illustrated in Fig. 7. A direct quantum channel between the QPUF 210 and the decoder 730 may, e.g., be used if the quantum response is not digitized immediately at the output of the QPUF 210. Conversely, a quantum channel to an intermediate element, such as the processing circuitry 720, may be employed if the quantum response is digitized immediately at the QPUF output interface.

When respectively decoding the one or more retrieved codewords *M*, the decoder 730 may be configured to, for the respective query data message *D̅*, derive classical cryptographic material from the one or more respective quantum responses 212 obtained for the query data message *D̅* for the respective retrieved codeword *M,* and to generate the binary decision for the query data message *D̅* based on the classical cryptographic material for the respective retrieved codeword *M*. In other words, the decoder 730 mirrors the initial generation of the classical cryptographic material by the encoder 230 during the enrollment of the respective candidate data message *D̅*.

Analogously to what is described above with respect to Fig. 2 for the enrollment phase, the one or more respective quantum responses obtained for the respective query data message *D̅* may comprise a sequence of quantum states. When deriving the classical cryptographic material for the query data message *D̅* for the respective retrieved codeword *M,* the decoder 730 may be configured to partition the sequence of quantum states into at least a first subsequence and a second subsequence. This is analogous to the partitioning by the encoder 230 during the enrollment phase. Furthermore, the decoder 730 may be configured to reproduce a secret key *Ŝₛₖ* for the respective retrieved codeword based on the first subsequence and respective helper data *Mₛₖ* retrieved from the data storage 250 together with respective retrieved codeword *M*. Similarly, the decoder 730 may be configured to reproduce common randomness *Ŝ_{cr}* for the respective retrieved codeword *M* based on the second subsequence and respective helper data *M_{cr}* retrieved from the data storage 250 together with respective retrieved codeword *M*. The decoder 730 may be further configured to derive a sub-key ${\hat{\overline{S}}}_{sk}$ for the respective retrieved codeword *M* with increased statistical uniformity from the secret key *Ŝₛₖ* for the respective retrieved codeword *M*. For example, for each query data message *D̅*, the sub-key ${\hat{\overline{S}}}_{sk}$ and the common randomness *Ŝ_{cr}* for the respective retrieved codeword *M* may be reconstructed from the $\left({M}_{cr}, {M}_{sk}, {ρ}_{Y}^{⊗ n}\right)$ by inverting the extraction operation used during enrollment.

When generating the binary decision for the respective query data message *D̅*, the decoder 730 may be configured to select a bijective mapping based on the query data message and to transform the reproduced common randomness for the respective retrieved codeword *M* using the selected bijective mapping to generate a test component for the respective retrieved codeword *M*. Furthermore, the decoder 730 may be configured to unmask the one or more retrieved codewords *M* using the derived sub-key *S̅̂̅ₛₖ* for the respective retrieved codeword *M* to obtain a respective unmasked codeword, and to compare the test component for the respective retrieved codeword *M* to the respective unmasked codeword to generate the binary decision for the respective query data message *D̅*.

For example, for any query data message *D̅*, a decoder mapping *D_{D}:U^{k}* ×*Yⁿ* ↦ {0,1} may be defined by 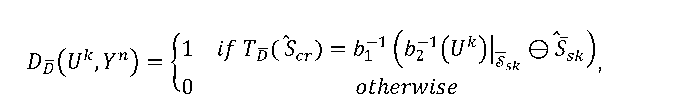 where *T_{D̅}*(*Ŝ_{cr}*) is the test component for the retrieved codeword *M* and 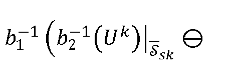 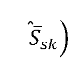 is the unmasked codeword.

The decoder 730 outputs "1" to indicate that the query data message *D̅* was stored and "0" otherwise.

Two types of identification errors are to be considered:
(i) a miss (first kind error) when *D̅* is actually in the data storage 250 but the decoder 730 fails to recognize it, and
(ii) a false alarm (second kind error) when *D̅* is not in the data storage 250 but the decoder 730 incorrectly reports it as present.

By construction, the identification error probabilities of both first and second kind satisfy Pr{*D_{D}*(*E_{D}*(*Xⁿ*)*,Yⁿ*) = 0} ≤ ε and Pr{*D_{D}*(*E_{D̅}*(*Xⁿ*)*,Yⁿ*) = 1} ≤ ε for all distinct *D, D̅* ∈ 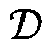 , and privacy leakage remains bounded by *I*(*T*;*X*) *- I*(*X*;*Y*|*T*)*.* The identification protocol allows to make both error probabilities arbitrarily small with large enough *n*. In other words, Pr(*D_{D}*(*E_{D}*(*Xⁿ*)*,Yⁿ*) = 0) → 0 and Pr(*D_{D}*(*E_{D̅}*(*Xⁿ*)*, Yⁿ*) = 1) → 0. The proposed identification protocol thus enables information-theoretic secure membership testing for any message in 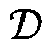 , while achieving a double-exponential identification rate and negligible privacy leakage.

Privacy is ensured as an unauthorized observer who sees only the data storage 250 (all the encoded values for every possible *D*) cannot tell which data message is being queried or even which messages are stored. In fact, for any eavesdropper that only has the stored values, the sum of the error probabilities for both kinds should remain close to 1 (essentially a random guess). That is for any strategy ${D}_{D}^{E}$ of an adversary, the result may be shown for stronger requirement $Pr \left({D}_{D}^{E}\left({E}_{D}\left({X}^{n}\right)\right)=0\right) + Pr \left({D}_{D}^{E}\left({E}_{\overline{D}}\left({X}^{n}\right)\right)=1\right) = 1$. In other words, an eavesdropper's best strategy yields no reliable information about *D̅* beyond what is trivial.

The secure identification capacity is characterized by the largest identification rate of double order ${R}_{ID} = \frac{1}{k} log log \left|D\right|$ (where 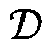 is the number of messages) achievable with vanishing error and leakage. For the case when there is no external source of common randomness, the capacity is bounded above by ${lim}_{n \to ∞} {sup}_{Λ , \left.T\right| X} \left\{\frac{1}{n}I\left({X}^{n};\left.{Y}^{n}\right|{T}^{n}\right)ρ+{ρR}_{PS}\right\}$, where for each storage cell in the data storage 250, ρ > 0 symbols are read from the QPUF 210 and *R_{PS}* is the used public storage rate used for common randomness. Further the bound on both *R_{PS}* and the privacy leakage rate is given by *I*(*T*;*X*) *- I*(*X*;*Y*| *T*). *C_{ID}* > 0 if and only if a positive secret-key rate is extracted from the output of the QPUF 210. This is a quantum dichotomy theorem: either the QPUF 210 produces some intrinsic randomness (yielding a secret key), in which case arbitrarily many messages may be securely identified, or it produces none, in which case secure identification is impossible (only trivial identification up to negligible rate is possible). This mirrors classical results for identification codes, but in the quantum setting it emphasizes the contribution of QPUF randomness to security.

The processing circuitry 720, the decoder 730 and the interface 740 may be realized as separate physical devices connected via interfaces, or as integrated sub-elements or software-defined functions within a single device. The apparatus 700 may be a standalone device (i.e., be provided in a standalone housing) or be for integration into a user device such as a laptop or server.

Analogously to the method 600, the apparatus 700 allows to perform highly efficient membership testing and secure identification. For example, a legitimate user wants to test for a specific message *D̅*. The user inputs the identifier *D̅* and the same at least one challenge applied to the QPUF 210 to generate a response state ${ρ}_{Y}^{⊗ n}$. The message *D̅* is not input to the QPUF 210. Rather, *D̅* is the user's query. The decoder 730 uses ${ρ}_{Y}^{⊗ n}$ and the codebook (i.e., the content of the data storage 250) to determine if *D̅* is among the stored messages. As described above, this may be done by comparing the QPUF-derived key with the codeword of *D̅* in the database. The decoder 730 outputs "YES" if the observed QPUF output and the database contents match the encoded codeword of *D̅*, otherwise outputs "NO".

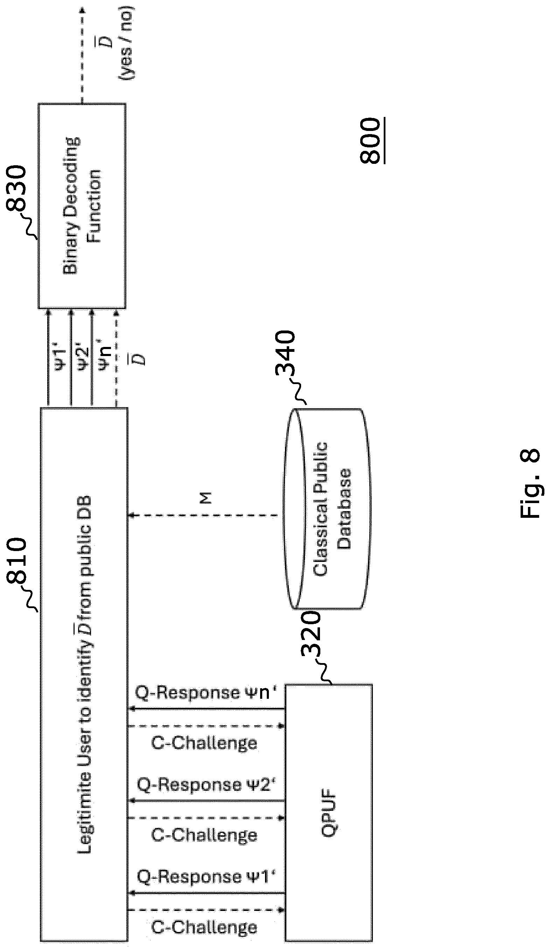

**Fig. 8** additionally illustrates an exemplary data flow 800 for the case of a single (i.e., one) query data message *D̅* and a single (i.e., one) retrieved codeword *M* representing a single (i.e., one) candidate data message. The data flow 800 shows the identification phase subsequent to the enrollment phase shown in Fig. 3 by means of the data flow 300.

A legitimate user 810 triggers that the QPUF 320 previously used for the enrollment is again queried n times, i.e., the same challenge sequence is re-applied to the QPUF 320 to obtain *n* new correlated quantum responses *ψ*1'*, ψ*2'*,* ... , *ψn'* which represent a quantum state. The quantum state is processed by the binary decoding function 830 together with the publicly stored codeword *M* and the query data message *D̅* as described above to generate a binary decoding. The binary decoding function 830 perform a "membership test" to decide whether the queried data message *D̅* is the candidate data message represented by the stored codeword *M*. The binary decoding function 830 decoder outputs "yes" or "1" if the queried data message *D̅* matches the date data message represented by the stored codeword *M,* and "no" or "0" otherwise. In other words, a single bit indicating presence/absence of the queried data message *D̅* may be output.

The above described identification of data messages may be expanded by additionally using a public source for the generation of the common randomness. As indicated in Fig. 7, the decoder 730 may like the encoder 230 of the apparatus 200 optionally have access to the public source 260 and be configured to query the public source 260 separate from the QPUF 210 to obtain the sequence of states 261. The decoder 730 may further be configured to combine the second subsequence with the sequence of states 261 received from the public source 260 and accordingly generate the common randomness based on the combined sequence. For each codeword decoding, the decoder 730 may draw symbols from the public source 260. For example, the decoder 730 may apply the same time-sharing as encoder 230 and challenge the QPUF 210 for

On retrieval, the legitimate decoder may apply the same time-sharing: they challenge the QPUF 210 for $\left⌈αn\right⌉$ uses and also query the public source 260 for the remaining $n - \left⌈αn\right⌉$ uses. These two pieces of information are combined for the common randomness to test the presence of the query data message in the retrieved codeword. Any adversary, while also seeing the public source output (it is not secret), still cannot replicate the QPUF-derived portion, so secrecy is maintained.

Now for the case where external source is used to help in generation of common randomness, The largest achievable rate (capacity) achievable in this case is ${lim}_{n \to ∞} {sup}_{α ∈ \left[0, 1\right) , Λ , T \left|X, \overline{T}\right| \overline{X}} \left\{\frac{I \left(\left.{\overline{X}}^{\left⌈nα\right⌉}; {Y}^{\left⌈nα\right⌉}\right|{\overline{T}}^{\left⌈n-nα\right⌉}\right)}{n α}ρ+\frac{I \left(\left.{X}^{\left⌈n-nα\right⌉}; {Y}^{\left⌈n-nα\right⌉}\right|{T}^{\left⌈n-nα\right⌉}\right)}{\left⌈n-nα\right⌉}ρ\right\}$ where ρ > 0 represents the combined symbols that are read from the QPUF 210 and the external source 260. Further, the privacy leakage in this case does not increase and is bounded by (1 - *α*)(*I*(*T*;*X*) *- I*(*X; Y* | *T*)).

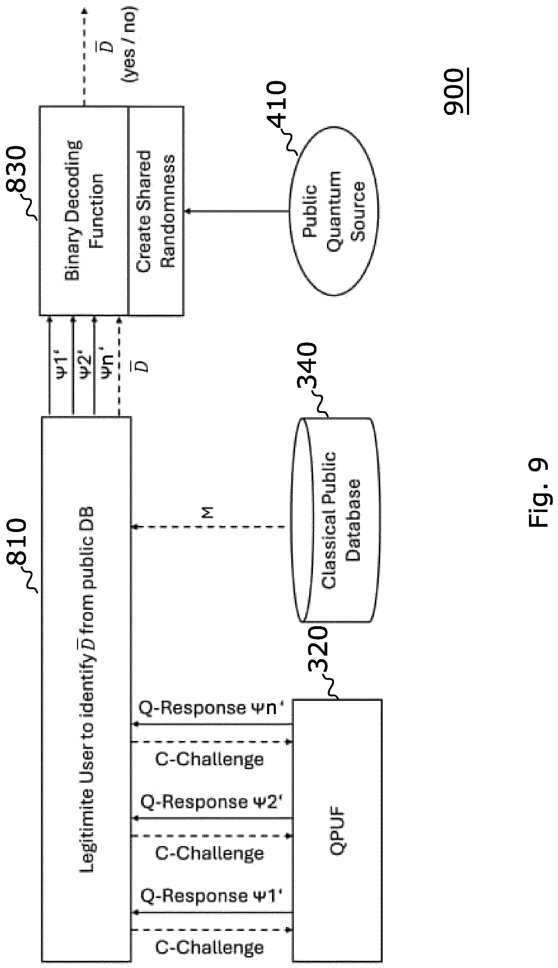

**Fig. 9** additionally illustrates an exemplary data flow 900 enhancing the data flow 800 with additional quantum public source 410. The data flow 900 shows the identification phase subsequent to the enrollment phase shown in Fig. 4 by means of the data flow 400.

To improve the identification-based decoding, the decoding function 830 receives quantum states from the external public quantum source 410, enabling the generation of common randomness shared with the encoding function 330 of the enrollment phase. For example, a legitimate party may trigger querying both the QPUF 320 and the quantum public source 410 according to the same schedule. The output of the quantum public source 410 is combined with the output of the QPUF 320 to enhance the decoding in the identification phase.

As described above, the additional quantum public source 410 may increase the achievable identification rate without increasing leakage - a departure from classical information theory (where public randomness does not improve secure transmission capacity). This is because the additional quantum public source 410 furnishes genuine common randomness (e.g., quantum-entangled or classically correlated) without additional privacy cost, and it may be tailored into the coding to boost distinguishability of legitimate codewords. Accordingly, the proposed identification protocol may support even more data messages (or higher reliability) when supplemented by such a common quantum resource, while still guaranteeing negligible information gain to an eavesdropper.

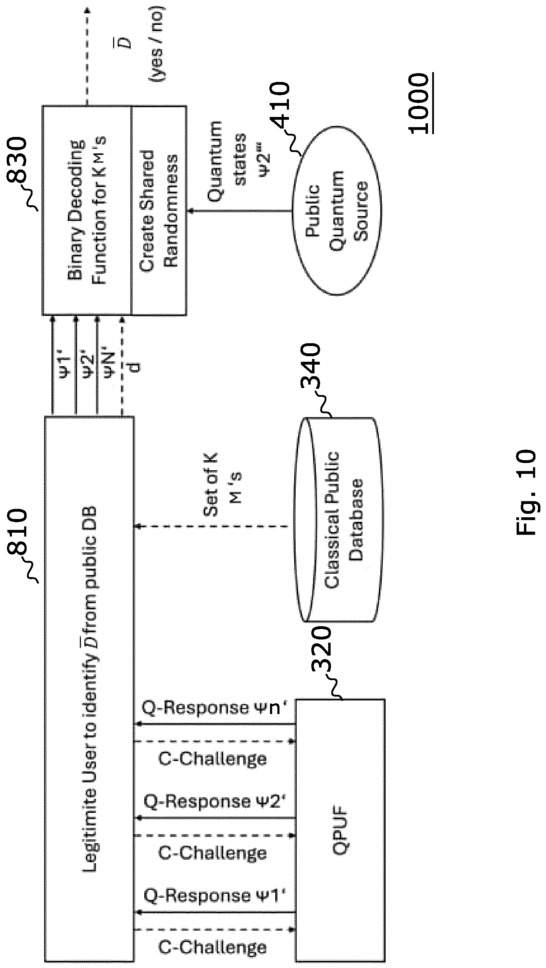

**Fig. 10** additionally illustrates an exemplary data flow 1000 for the case of a single (i.e., one) query data message *D̅* and multiple (*K >* 1) retrieved codewords *M* representing respective ones of multiple candidate data messages. The data flow 1000 shows the identification phase subsequent to the enrollment phase shown in Fig. 5 by means of the data flow 500. In this scenario, one is interested in whether a given query message *D̅* belongs to some target set *S* of size *K*, without revealing which set or which element is of interest. The overall set of messages is *D* = 1,2, ..., *Z* and any subset *S* ⊂ *D* with |*S*| *= K* might be the true target set.

The binary decoding function 330 has the query message *D̅* and a target set *S* of size *K* (as one wants to know if *D̅* is in *S*). Therefore, the same at least one challenge is applied to the QPUF 320 for each codeword *M* of the candidate data messages in the target set S to obtain the quantum state ${ρ}_{Y}^{n}$, and then the inclusion test is performed using ${ρ}_{Y}^{n}$ and the retrieved codewords *M* from the data storage 250 to determines if *D̅* is one of the members of *S*. For example, the above described identification test may be performed subsequently or concurrently for each of the *K* codewords. This test succeeds whether or not *D̅* is in *S*. In error terms, if *D̅* is in S, the binary decoding function 830 should identify it (no false negative), and if *D̅* is not in *S*, the binary decoding function 830 should not identify it (no false positive). Because S could be any subset of size *K*, the protocol's correctness holds uniformly over all $\left(\begin{matrix}Z \\ K\end{matrix}\right)$ possible target sets.

The proposed *K* identification protocol ensures that across all *K* rounds, the overall probability of any error remains small, and the overall information leaked is bounded (each round leaks at most ε). By construction, each round's queries are effectively independent and keyed by fresh randomness, so that information from one round does not compromise others. The average key consumption per round may be *0*(1/*n*) so that *K* may be made large up to a limit determined by the initial common randomness rate. By the union bound, all *K* tests succeed simultaneously with high probability. An adversary without the QPUF 320 cannot distinguish any of the *D̅ₗ*, so effectively the probability of any correct identification by an unauthorized party is negligible.

The effective capacity for K-identification may be characterized by extending known bounds for single identification to multiple simultaneous queries. In practice, this means one may identify exponentially many *K*-sets of data messages. The complexity of the decoding function 830 grows with *K*, but since each identification test is simple, the proposed K identification protocol remains practical.

The K-identification protocol thus generalizes the single-target case. Its correctness and secrecy guarantees mirror those of the basic identification: errors vanish for each query data message *D̅*, and an adversary observing only the database cannot distinguish which subset is used or which member is being tested, within the privacy leakage limit. In effect, the decoder is checking if any one of *K* "marked" messages is present, and the QPUF-based encoding supports this multi-message test.

Practical examples include group membership queries (e.g., checking if one's spouse or one of K friends is in the dataset), event recognition tasks (e.g., whether a certain odor signature belongs to a set of K target chemicals), or multi-key authorization (e.g., if at least one of *K* security keys is valid). The design simply repeats the identification test for a set of *K* targets. Although K-identification increases the combinatorial possibilities (the space of hypotheses grows), it does not fundamentally change the nature of the encoding or decoding operations - it just involves an additional layer of "for any of *K* values" logic. In information terms, the identification capacity scales accordingly, essentially multiplying the reliability demands by *K,* but the underlying QPUF usage remains efficient.

No additional details are needed beyond what was established for identification. The capacity bounds extend by treating the target set as part of the code's message, since *K* independent identifiers may be checked in parallel, still under the same leakage constraints. In practice, checking membership in larger sets is readily accommodated by the same QPUF-based infrastructure, further demonstrating the scalability of the approach.

The use of the public quantum source 410 is not mandatory as described above with reference to Figs. 3, 4, 8 and 9.

In alternative examples of K-identification, multiple query data messages may be checked against a single codeword representing a single candidate data message.

The proposed identification protocol leverages the inherent unclonability and randomness of the QPUF to achieve information-theoretic secrecy. In particular, the proposed identification protocol provides perfect secrecy as the public identification data reveals negligible information about the secret, e.g., *I*(*D*; *M*) *=* 0 or similarly constrained. Unlike encryption-based schemes, dentification may be done with a small quantum storage/cell usage. By using identification codes, double exponentially more data messages are supported compared to classical transmission codes. The unclonability of the quantum challenge-response prevents duplication or easy forging of responses. The proposed identification protocol allows unconditional privacy leakage bounds or even zero leakage if shared private randomness is preestablished between encoder and decoder. Thus, a rigorous foundation is provided for quantum-secure storage systems that maintain low latency and energy use while protecting data and query privacy in adversarial environments. This versatility caters to diverse scenarios, from loT devices with limited resources to high-security databases.

The proposed identification protocol ensures that a legitimate user (with the QPUF) can perform the membership test) with arbitrarily low probability of error, while any unauthorized adversary (without the QPUF) gains negligible information about the data or identification result. In information-theoretic terms, one can make the identification error probabilities arbitrarily small (by choosing large enough block lengths and proper codes). Secrecy against eavesdropping is formalized by making the mutual information *I*(*D*;*V^{k}*), where *V^{k}* are the stored symbols, approach zero. These guarantees hold even if the adversary has enormous classical and quantum computing power, as long as they cannot clone the QPUF's secret.

Numerical performance (e.g., identification rate) matches the theoretical bounds derived from the chosen coding theorems. In particular, the proposed identification protocol may achieve near-optimal identification rates, leveraging the known fact that with randomness the number of distinguishable messages is double-exponential in resources. The addition of a second source and the K-identification extension may similarly achieve their respective theoretical limits under the proposed design.

The proposed identification protocol may be embodied in various architectures. For instance, one could implement the QPUF as a photonic or solid-state quantum device co-located with the data storage, or accessed remotely via secure quantum channels. The data storage may be any storage medium accessible by users (and potential adversaries). The encoders and decoders may be implemented in software/firmware. A legitimate user needs genuine access to the same QPUF as was used during enrollment, which may be arranged via hardware provision.

In practice, a single application of the QPUF may serve multiple enrollments. After measuring ${ρ}_{X}^{n}$, the post-measurement quantum state may still be used: One part of the measurement yields the classical response and secret key, while the remaining quantum state is only slightly disturbed. Consequently, the same QPUF challenge may often be reused for a second identification instance. For example, one may extract a nearly identical classical response and secret key from the first measurement, then reapply a measurement to the leftover state for a second round. This reuse provides a significant efficiency advantage in QPUF-based storage: classically, each enrollment consumes a fresh challenge, but with QPUFs, one can amortize multiple storage operations on a single quantum state.

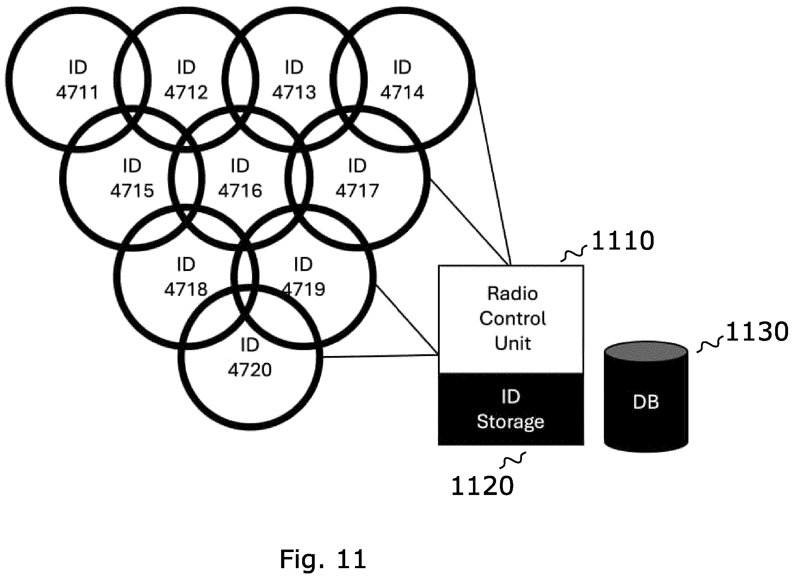

**Fig. 11** further illustrates an exemplary use of the proposed identification protocol in a cellular communications environment.

Mobile devices connect to mobile cells to access network services. There are approximately 80,000 LTE mobile cells in Germany, serving around 110 million SIM cards. Service providers offering location-based services may seek access to information about the whereabouts of mobile network users. However, strict data privacy regulations restrict the storage of such personally identifiable information. The proposed identification protocol, however, enables a privacy-preserving alternative as it limits the semantic scope of stored location data to a binary query: Was the user present in this mobile cell at a specific date and time?

In the example of Fig. 11, a radio control unit 1110 manages ten mobile cells with IDs 4711 to 4720. The apparatus 1120 executes the proposed identification protocol. As described above, the apparatus 1120 uses an identification code derived from randomness generated by the QPUF to securely encode the geolocation and timestamp of mobile network users connected to any of the managed cells. For example, one data set may be generated per user per minute, resulting in 1,440 data sets per user per day. The encoded data is stored in a central database 1130 owned by the network operator and is not made publicly accessible. This centralized database 1130 serves all 110 million customers of the network provider. The provider may, in compliance with service agreements and data privacy regulations, grant access to selected data for external parties or utilize the data internally for its own services.

One possible service for a payment service provider may be checking credit card transactions based on the geolocation of a payer. Another possible service for an advertisement provider may be with the goal to place relevant adverts based on the surroundings of the user. A possible service for a content streaming provider may be enforcing geo blocking requirements for certain digital content. One possible service for police and legal enforcement may be to collect evidence or checking for potential offenders.

Using identification storage technology with a QPUF allows for a significant reduction in the size of the central database 1130. For example, 110 million users generating one data set per minute may result in approximately 158 billion data sets per day. Assuming each data set is stored in a classical XML format of 100 bytes, this would require at least 15.8 terabytes of storage per day using conventional database technology. On a global scale, with an estimated 8 billion users, this would amount to over 1.1 petabytes of data daily.

In contrast, the proposed identification-code-based storage may dramatically reduce the volume of required storage. When data is encoded to answer a specific binary question - such as "Was the user logged into cell ID 4711 at 12:34?" - only about 4 bits may be needed per entry. This results in approximately 79 GB of data per day. On a global scale, assuming 40 million mobile cells worldwide, each identification message may require around 5 bits, leading to a total daily database size of approximately 7.2 TB. In relative terms, the proposed identification-based approach may reduce database size by a factor of 150 compared to classical storage methods. Moreover, the data privacy of such a system is inherently strong, as the database is only capable of answering the specific question it was designed to encode. No additional or unintended inferences about user behavior or identity may be drawn from the stored data. The proposed identification protocol may lead to orders-of-magnitude reductions in storage requirements, making the proposed identification protocol highly efficient for privacy-preserving, large-scale location data management.

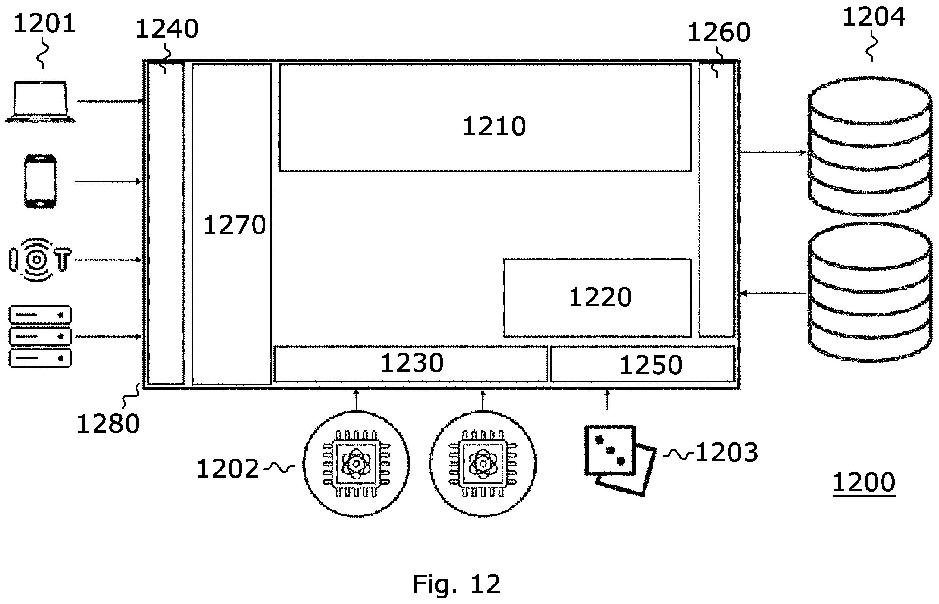

**Fig. 12** further illustrates an exemplary apparatus 1200 for enrolling and identifying the presence of data messages in accordance with the proposed identification protocols.

The apparatus 1200 comprises a QPUF 1210 as described above. The QPUF 1210 is capable of receiving queries over a classical communication channel - such as fiber, Ethernet or Wi-Fi - using standardized classical IT protocols (e.g., HTTP, HTTPS, RPC, XML, JSON or streaming protocols). It converts the received classical challenges into quantum states, which may include photons with various encodings, fermionic or bosonic gases, superconducting or superfluid systems, or atomic systems - each potentially in single, clustered, physical, or error-corrected form. These quantum states are then transmitted to the encoder and decoder via a quantum communication channel, such as standard single-mode or multi-mode optical fibers, hollow-core fibers, or free-space optical links. The specific physical realization of the QPUF 1210 does not matter for the proposed secure storage protocol.

Additionally, the apparatus 1200 comprises a combined identification encoder & decoder 1220 as described above for encoding of classical data messages *D* into data messages (codewords) *M* for (K-)identification, as well as decoding of secure classical messages *D* into binary outputs. The combined identification encoder & decoder 1220 may be either a classical system (such as a FPGA, CPU or GPU) or a quantum system (including quantum computers based on atoms, photons, charge, or flux qubits), with quantum states provided by the QPUF 1210. In the example of Fig. 12, the combined identification encoder & decoder 1220 performs the querying of the QPUF 1210 (i.e., the combined encoder & decoder 1220 performs the functionalities of the processing circuitry described above).

The apparatus 1200 further comprises interfaces 1230, 1240, 1250 and 1260. The interface 1230 is a quantum interface for importing quantum states (quantum responses) from the QPUF 1210 as well as optionally from further external quantum sources 1202. The external quantum sources 1202 may, e.g., provide entangled quantum states for both the encoding and decoding operations, enabling the generation of shared randomness. This common randomness allows for an exponential reduction in the amount of data that needs to be persisted. The interface 1240 is a classical interface for receiving user data from external devices 1201 such as laptops, servers, mobile phones or loT devices. The interface 1250 is an interface for receiving external classical cryptographic data - such as input from random number generators 1203 - and supplying It to the combined encoder & decoder 1220. The random number generators 1203 may be classical or quantum random number generators that derive their entropy from classical processes (e.g., thermal noise, chaotic systems) or quantum effects (e.g., photon detection, quantum tunneling). The interface 1260 is for sending data to or retrieving data from external publicly accessible data storages 1204 such as public databases or blockchains.

In addition, the apparatus 1200 comprises a process manager 1270, which may be a classical application, to orchestrate and execute the encoding and decoding operations.

The apparatus 1200 is a stand-alone device, i.e., the above described components of the apparatus 1200 are arranged within a housing 1280 of the apparatus 1200.

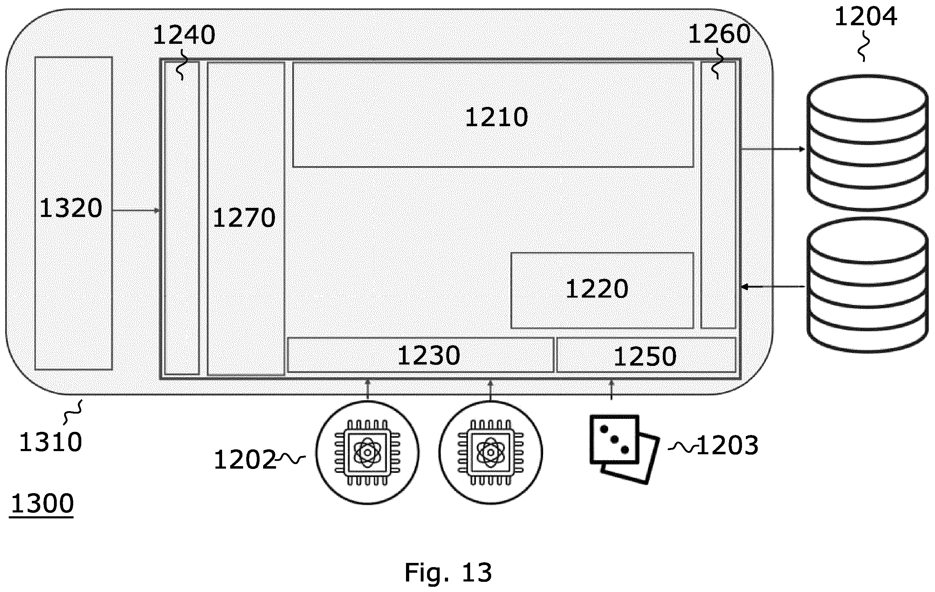

**Fig. 13** illustrates an exemplary user device 1300 such as a laptop, a server, a mobile phone or an loT device. The apparatus 1200 described above is integrated into the user device 1300.

The quantum sources 1202, the random number generators 1203 and the publicly accessible data storages 1204 are connected via the interfaces 1240, 1250 and 1260 like in the example of Fig. 12.

The apparatus 1200 is coupled to a processor 1320 of the user device 1300.

The integration of the apparatus 1200 into the user device 1300 enables a high degree of miniaturization, allowing the apparatus 1200 to fit within the housing 1310 of user device 1300.

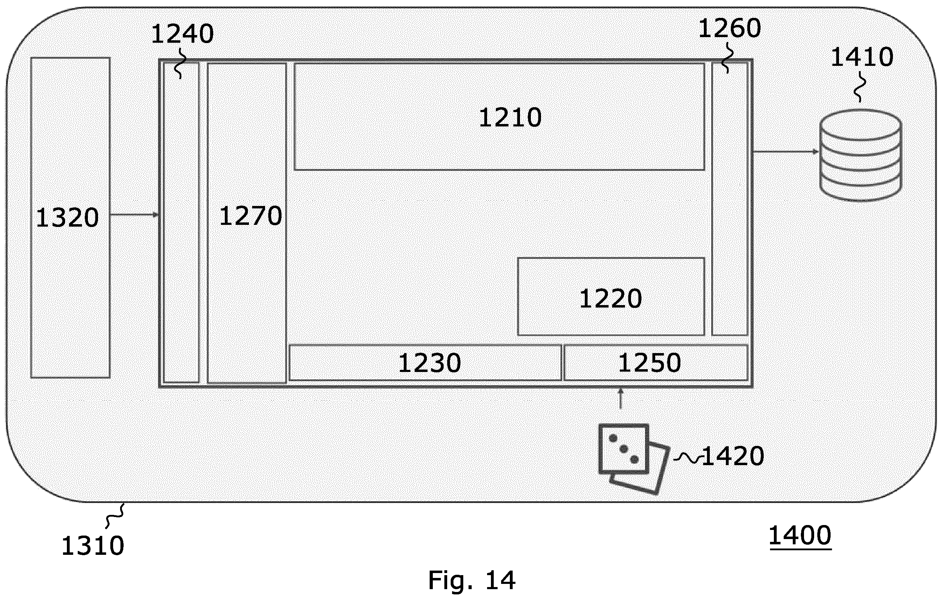

**Fig. 14** illustrates an exemplary monolithic user device 1400. In comparison to the user device 1300 described above, the interface does not exchange data with an external data storage but with an internal data storage 1410 of the user device 1400 such as a flash drive or hard disk. The data do not leave the user device 1400 such that the data storage 1410 may be understood as an internal QPUF storage.

Compared to the user device 1300, the user device 1400 further omits the external quantum sources. The external random number generators 1203 are further omitted. Instead, the user device 1400 comprises an internal (quantum) random number generator 1420 for supplying additional randomness to the encoding and decoding functions of the combined identification encoder & decoder 1420.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (100) for enrolling a data message for identification in a data storage, the method (100) comprising:
applying (102) at least one challenge to a Quantum Physically Unclonable Function, QPUF, to obtain at least one quantum response;
generating (104) a codeword for the data message based on the at least one quantum response; and
storing (106) the codeword in the data storage.

2. The method (100) of claim 1, wherein generating (104) the codeword comprises:
deriving classical cryptographic material from the at least one quantum response; and
generating the codeword for the data message based on the classical cryptographic material.

3. The method (100) of claim 2, wherein the at least one quantum response comprises a sequence of quantum states, and wherein deriving the classical cryptographic material comprises:
partitioning the sequence of quantum states into at least a first subsequence and a second subsequence;
generating a secret key based on the first subsequence; and
generating common randomness based on the second subsequence.

4. The method (100) of claim 3, wherein generating (104) the codeword for the data message comprises:
transforming the common randomness using a message-dependent bijective mapping to generate a transformed component;
deriving a sub-key with increased statistical uniformity from the secret key; and
cryptographically combining the transformed component and the sub-key to generate the codeword.

5. The method (100) of claim 4, wherein cryptographically combining the transformed component and the sub-key comprises bitwise XORing the transformed component and the sub-key.

6. The method (100) of claim 4 or claim 5, further comprising:
generating at least one of first helper data for reproduction of the secret key and second helper data for reproduction of the common randomness in a subsequent identification of the presence of the data message in the data storage; and
storing the at least one of the first helper data and the second helper data in the data storage together with the codeword.

7. The method (100) of claim 6, wherein the first helper data has zero mutual information with the secret key, and wherein the second helper data is generated with bounded privacy leakage regarding the second quantum subsequence used to generate the common randomness.

8. The method (100) of any one of claims 4 to 7, wherein generating the common randomness comprises:
combining the second subsequence with a sequence of states received from a public source separate from the QPUF to obtain a combined sequence; and
generating the common randomness based on the combined sequence.

9. The method (100) of claim 8, wherein the public source is a public quantum source, wherein the sequence of states is a sequence of quantum states.

10. A method (600) for identifying the presence of one or more query data messages with respect to one or more candidate data messages represented by one or more codewords stored in a data storage, comprising:
retrieving (602) the one or more codewords from the data storage;
respectively applying (604) to a Quantum Physically Unclonable Function, QPUF, for each of the one or more query data messages, one or more challenges previously used for the QPUF during an enrollment of the respective query data message in the data storage, to obtain one or more respective quantum responses; and
respectively decoding (606) the one or more retrieved codewords based on the one or more respective quantum responses to generate a binary decision indicating whether the respective query data message is present in the one or more candidate data messages.

11. The method (600) of claim 10, wherein respectively decoding (606) the one or more retrieved codewords comprises, for the respective query data message:
deriving classical cryptographic material from the one or more respective quantum responses obtained for the query data message for the respective retrieved codeword; and
generating the binary decision for the query data message based on the classical cryptographic material for the respective retrieved codeword.

12. The method (600) of claim 11, wherein the one or more respective quantum responses obtained for the respective query data message comprise a sequence of quantum states, and wherein deriving the classical cryptographic material for the query data message for the respective retrieved codeword comprises:
partitioning the sequence of quantum states into at least a first subsequence and a second subsequence;
reproducing a secret key for the respective retrieved codeword based on the first subsequence and respective first helper data retrieved from the data storage together with respective retrieved codeword; and
reproducing common randomness for the respective retrieved codeword based on the second subsequence respective second helper data retrieved from the data storage together with respective retrieved codeword.

13. The method (600) of claim 12, wherein generating the binary decision for the respective query data message comprises:
selecting a bijective mapping based on the query data message;
transforming the reproduced common randomness for the respective retrieved codeword using the selected bijective mapping to generate a test component for the respective retrieved codeword;
deriving a sub-key for the respective retrieved codeword with increased statistical uniformity from the secret key for the respective retrieved codeword; and
unmasking the one or more retrieved codewords using the derived sub-key for the respective retrieved codeword to obtain a respective unmasked codeword; and
comparing the test component for the respective retrieved codeword to the respective unmasked codeword to generate the binary decision for the respective query data message.

14. The method (600) of any one of claims 10 to 13, wherein the one or more query data messages is one query data message, and wherein the one or more retrieved codewords is one codeword representing one candidate data message.

15. The method (600) of any one of claims 10 to 13, wherein the one or more query data messages are multiple query data messages, and wherein the one or more retrieved codewords is one codeword representing one candidate data message.
